# EUROPEAN PATENT APPLICATION

(11) **EP 4 715 552 A1**
(43) Date of publication of application: **25.03.2026**
(21) Application number: 24819604.0
(22) Date of filing: 07.06.2024
(51) Int. Cl.: G06F 3/04845, G06F 3/04842, G06F 3/0481, G06F 9/451

(54) **ELECTRONIC DEVICE FOR MOVING EXECUTION SCREEN OF APPLICATION, OPERATION METHOD THEREOF, AND STORAGE MEDIUM**

(30) Priority: 07.06.2023 KR 20230072667; 23.08.2023 KR 20230110636
(71) Applicant: Samsung Electronics Co., Ltd., Suwon-si, Gyeonggi-do 16677 (KR)
(72) Inventor: NA, Haeree, Suwon-si Gyeonggi-do 16677 (KR); MOON, Heekyung, Suwon-si Gyeonggi-do 16677 (KR); PARK, Wanje, Suwon-si Gyeonggi-do 16677 (KR); AN, Jinwan, Suwon-si Gyeonggi-do 16677 (KR); CHO, Junhee, Suwon-si Gyeonggi-do 16677 (KR)
(74) Representative: HGF
(86) International application number: PCT/KR2024/007793
(87) International publication number: WO 2024/253453

(57) **Abstract**

According to an embodiment, an electronic device (101, 201) may comprise: a display (160, 260); at least one processor (120, 220) operatively connected to the display; and a memory (130, 230) operatively connected to the at least one processor. According to an embodiment, the memory may store instructions configured to, when executed, cause the electronic device to display, through the display, a first handler (511a, 611a, 711a, 811a) for moving a window in a first portion of the window (510, 610, 710, 810), which correspondes to an execution screen of an application. According to an embodiment, the instructions may be configured to cause the electronic device to identify at least one of the size, position, or direction of an exposed second portion (512, 612, 712, 812) of the window as at least a portion of the window is hidden. According to an embodiment, the instructions may be configured to cause the electronic device to determine the position and size for displaying a second handler (511b, 611b, 711b, 811b) on the basis of at least one of the size, position, or direction of the exposed second portion of the window. According to an embodiment, the instructions may cause the electronic device to display the second handler (511b, 611b, 711b, 811b) in the exposed second portion of the window through the display on the basis of the determined position and size of the second handler (511b, 611b, 711b, 811b).

## Description

### [Technical Field]

An embodiment of the disclosure relate to an electronic device for moving an execution screen of an application, a method for operating the same, and a storage medium.

### [Background Art]

An electronic device may store various types of applications, execute an application for providing a specific service, and display graphic elements interactable with the user on the execution screen of the executed application.

As one electronic device is equipped with various applications, the electronic device may provide, e.g., multitasking capable of simultaneously using two or more applications. Thus, the electronic device may display the execution screens of the applications in two or more windows without inconvenience to the user's use of multitasking.

While the execution screen of an application to be used by the user is displayed by the electronic device, an application previously used may be displayed on a partial screen or subjected to a background state according to the user's control. For example, the user may simultaneously use a plurality of applications and execute another application without intent to terminate the application being used. Accordingly, windows for a plurality of applications may be displayed simultaneously on a screen. If a user may easily manipulate and move a window corresponding to an executing application, convenience of use is increased.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment, an electronic device 101, 201 may include a display 160, 260, at least one processor 120, 220 operatively connected to the display, and memory 130, 230 operatively connected to the at least one processor. According to an embodiment, the memory may store instructions configured to cause the electronic device, when executed, to display a first handler 511a, 611a, 711a, 811a for moving the window on a first portion of a window 510, 610, 710, 810 corresponding to an execution screen of an application through the display. According to an embodiment, the instructions may be configured to cause the electronic device to identify at least one of a size, a position, or an orientation of an exposed second portion 512, 612, 712, 812 of the window as at least a portion of the window is covered. According to an embodiment, the instructions may be configured to cause the electronic device to determine a position and a size to display a second handler 511b, 611b, 711b, 811b based on at least one of the size, the position, or the orientation of the exposed second portion of the window. According to an embodiment, the instructions may be configured to cause the electronic device to display a second handler 511b, 611b, 711b, 811b on the exposed second portion of the window through the display based on the determined position and size of the second handler 511b, 611b, 711b, 811b.

According to an embodiment, a method for moving an execution screen of an application in an electronic device 101, 201 may include displaying a first handler 511a, 611a, 711a, 811a for moving the window on a first portion of a window 510, 610, 710, 810 corresponding to an execution screen of an application. According to an embodiment, the method may include identifying at least one of a size, a position, or an orientation of an exposed second portion 512, 612, 712, 812 of the window as at least a portion of the window is covered. According to an embodiment, the method may include determining a position and a size to display a second handler 511b, 611b, 711b, 811b based on at least one of the size, the position, or the orientation of the exposed second portion of the window. According to an embodiment, the method may include displaying a second handler 511b, 611b, 711b, 811b on the exposed second portion of the window based on the determined position and size of the second handler 511b, 611b, 711b, 811b.

According to an embodiment, in a non-transitory storage medium storing instructions, the instructions are configured to cause an electronic device 101, 201 to perform at least one operation when executed by at least one processor 120, 220 of the electronic device, wherein the at least one operation includes displaying a first handler 511a, 611a, 711a, 811a for moving the window on a first portion of a window 510, 610, 710, 810 corresponding to an execution screen of an application. According to an embodiment, the at least one operation may include identifying at least one of a size, a position, or an orientation of an exposed second portion 512, 612, 712, 812 of the window as at least a portion of the window is covered. According to an embodiment, the at least one operation may include a method of determining a position and a size to display a second handler 511b, 611b, 711b, 811b based on at least one of the size, the position, or the orientation of the exposed second portion of the window. According to an embodiment, the at least one operation may include displaying a second handler 511b, 611b, 711b, 811b on the exposed second portion of the window based on the determined position and size of the second handler 511b, 611b, 711b, 811b.

### [Brief Description of Drawings]

FIG. 1 is a block diagram illustrating an electronic device in a network environment according to an embodiment.
FIG. 2 is a block diagram illustrating an internal configuration of an electronic device according to an embodiment.
FIG. 3 is a view illustrating movement of a window using a handler according to an embodiment.
FIG. 4 is an operation flowchart of an electronic device for moving an execution screen of an application according to an embodiment.
FIG. 5 is a view illustrating an exposed area and a hidden area according to movement of a window according to an embodiment.
FIG. 6 is a view illustrating a handler displayed on a portion (e.g., left side) of a window according to an embodiment.
FIG. 7 is a view illustrating a handler displayed on a portion (e.g., lower portion) of a window according to an embodiment.
FIG. 8 is a view illustrating a handler displayed on a portion (e.g., corner) of a window according to an embodiment.
FIG. 9 is a view illustrating a handler and an object related to the window according to movement of a window according to an embodiment.
FIG. 10 is a view illustrating handlers disposed according to movement of a window in a plurality of windows according to an embodiment.
FIG. 11A is a view illustrating handlers disposed within a plurality of windows having a stacked structure according to an embodiment.
FIG. 11B is a view illustrating a case where handlers are disposed in a first manner within a plurality of windows having a partially overlapping structure according to an embodiment.
FIG. 11C is a view illustrating a case where handlers are disposed in a second manner within a plurality of windows having a partially overlapping structure according to an embodiment.
FIG. 12A is an operation flowchart of an electronic device based on a mounting type or connection to an input device according to an embodiment.
FIG. 12B is an operation flowchart of an electronic device based on a type of electronic device according to an embodiment.
FIG. 13 is a view illustrating a display method of a handler based on a mounting type according to an embodiment.
FIG. 14 is a view illustrating a display method of a handler based on connection to an input device (e.g., stylus pen) according to an embodiment.
FIG. 15 is a view illustrating a display method of a handler based on connection to an input device (e.g., mouse) according to an embodiment.
FIG. 16A is a view illustrating a display method of a handler based on an electronic device including a first type of flexible display according to an embodiment.
FIG. 16B is a view illustrating a first display method of a handler based on an electronic device including a second type of flexible display according to an embodiment.
FIG. 16C is a view illustrating a second display method of a handler based on an electronic device including a second type of flexible display according to an embodiment.
FIG. 17A is a view illustrating a first display method of a handler based on an electronic device including a rollable display according to an embodiment.
FIG. 17B is a view illustrating a second display method of a handler based on an electronic device including a rollable display according to an embodiment.
FIG. 18A is a view illustrating an example screen where an on-going object is displayed when entering a minimum pop-up area according to an embodiment.
FIG. 18B is a view following FIG. 18A.
FIG. 19 is a view illustrating handler movement as an example of handler transformation according to an embodiment.
FIG. 20 is a view illustrating handler expansion as an example of handler transformation according to an embodiment.
FIG. 21 is a view illustrating shape transformation of a handler according to an embodiment.

In relation to the description of the drawings, the same or similar reference numerals may be used for the same or similar components.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

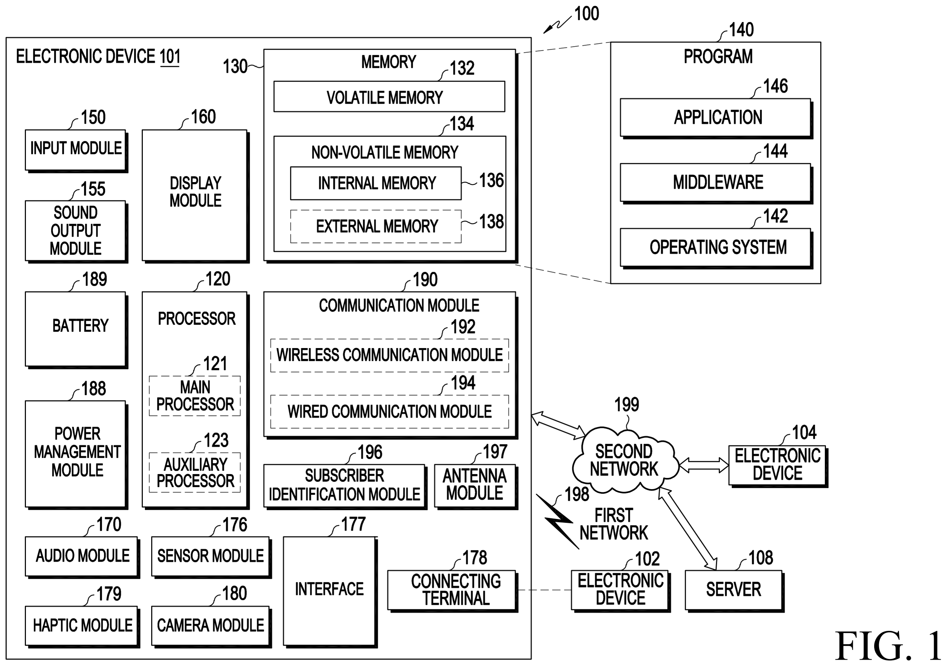

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following description, the components easy to understand from the description of the above embodiments are denoted with or without the same reference numerals and their detailed description may be skipped. According to an embodiment of the disclosure, an electronic device 101 may be implemented by selectively combining configurations of different embodiments, and the configuration of one embodiment may be replaced by the configuration of another embodiment. However, it is noted that the present invention is not limited to a specific drawing or embodiment.

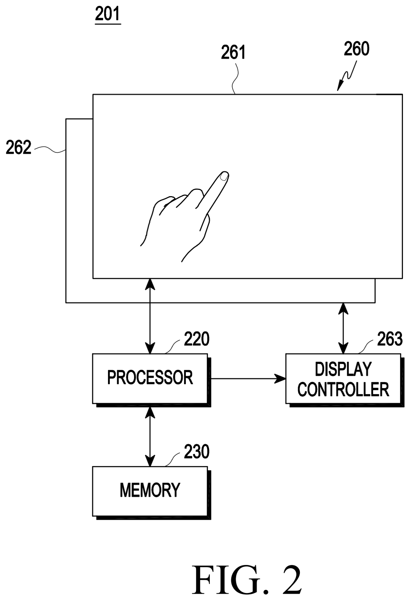

FIG. 2 is a block diagram illustrating an internal configuration of an electronic device according to an embodiment.

Referring to FIG. 2, an electronic device 201 (e.g., the electronic device 101 of FIG. 1) according to an embodiment may include a display 260 (e.g., the display module 160 of FIG. 1), at least one processor 220 (e.g., the processor 120 of FIG. 1) operatively connected to the display 260, and/or memory 230 (e.g., the memory 130 of FIG. 1) operatively connected to the at least one processor 220.

The electronic device 201 of FIG. 2 may include components identical or similar to those of the electronic device 101 of FIG. 1 Here, not all of components illustrated in FIG. 2 are essential components of the electronic device 201, and the electronic device 201 may be implemented by more or less components than those illustrated in FIG. 2.

Referring to FIG. 2, the display 260 that detects an input by a user's body (e.g., finger) or an input by a stylus pen may be provided to the electronic device 201.

According to an embodiment, the display 260 may not only simultaneously support input/output functions of data, but may also detect a touch. According to an embodiment, the display 260 may include a sensing panel 261, a display panel 262, and/or a display controller 263. According to an embodiment, the display 260 may be referred to as a touchscreen. The sensing panel may detect contact or proximity of a finger or an input device (e.g., a stylus pen). For example, the sensing panel may detect a hovering input by the input device, and it may transfer an input signal corresponding to the hovering input to the processor 220. Further, the sensing panel may detect the position of a touch input by a finger or an input device, and the display panel may output an image. The display controller may be a driving circuit that controls the display panel to output an image through the display panel.

According to an embodiment, the display 260 may include a flexible or foldable display. According to an embodiment, the display 260 may refer to a display in which at least a partial area may be deformed into a flat or curved surface. An electronic device 201 including a flexible display may be folded or bent based on one axis. Here, one axis may be preset or an arbitrary one. The axis being preset may mean that only a specific area (e.g., a partial area including the axis) of the flexible display of the electronic device 201 is bendable. On the other hand, the axis being arbitrary may mean that the entire area of the display of the electronic device 201 is bendable. For example, while it may be folded in half based on an axis passing through the center of the electronic device 201, those skilled in the art will readily understand that there is no limitation on the position of the axis. The electronic device 201 including a flexible display may vary between a folded state, an unfolded state, or a partially unfolded state (or partially folded state).

According to an embodiment, an electronic device 201 including a flexible display includes a housing including a first housing portion and a second housing portion, wherein the second housing portion may be configured to be movably associated with the first housing portion between a retracted position and an extended position.

According to an embodiment, the flexible display may be configured to be connected to the first housing portion and the second housing portion such that the size of a portion visible from the front side of the housing changes as the second housing portion moves between the retracted position and the extended position.

According to an embodiment, the electronic device 201 including a flexible display may include an actuator configured to move the second housing portion relative to the first housing portion.

According to an embodiment, when the display 260 is implemented in the form of a touch screen, it may display various information generated according to a user's touch operation. The display 260 may be the display module 160 described above with reference to FIG. 1.

According to an embodiment, the memory 230 may be electrically connected to the processor 220 and store at least one application. The memory 230 may store a control program for controlling the electronic device 201, a UI related to applications provided by the manufacturer or downloaded from the outside and images for providing the UI, user information, documents, databases, or related data.

According to an embodiment, the memory 230 may store at least one instruction that controls the processor 220 to perform various operations when executed.

According to an embodiment, the memory 230 may store instructions configured to cause the processor 220, when executed, to display a first handler for moving the window on a first portion of a window corresponding to an execution screen of an application, identify an exposed second portion of the window as at least a portion of the window is covered, and display a second handler on the exposed second portion of the window through the display 260.

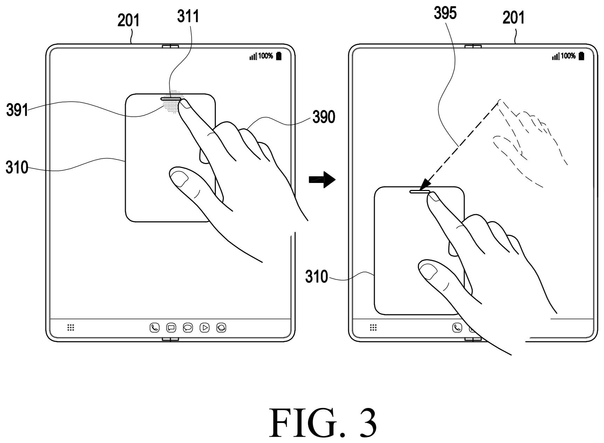

According to an embodiment, the processor 220 may execute at least one application in response to a user input. The processor 220 may display the execution screen (or window) of the application to occupy the entire display 260. When executing an application using a window, a window corresponding to the application may be output (or displayed) through the display 260. When two or more tasks proceed simultaneously, the processor 220 may provide two or more windows through one display 260. Here, an execution screen (or user interface) of an application may be displayed simultaneously in each window, and the size of each window may be adjusted. The window may be in a state in which a screen of an application currently being executed in the electronic device 201 is displayed, where a user may view the execution screen and operate specific buttons displayed on the execution screen. This is described below in detail with reference to FIG. 3.

FIG. 3 is a view illustrating movement of a window using a handler according to an embodiment.

Referring to FIG. 3, the processor 220 (or the electronic device 201) may output (or display) a window 310 corresponding to an application. FIG. 3 illustrates a case where the window 310 is displayed in the form of a pop-up view to occupy a portion of the display 260. The window 310 corresponding to the execution screen of the application may be movable and resizable. The window 310 may include an object (e.g., handler) 311 for changing the position of the window, i.e., for moving the window. The object 311, displayed on a portion of the window (e.g., top of the window), may be manipulable by a user to move the window 310. For example, the position of the window 310 may be changed by an input 391 of a user 390 to the object 311.

In an embodiment, the object 311 for moving the window 310 may be referred to as a handler, a handle area, or a handle portion. In the following description, an object that may be manipulated by a user to move a window is referred to as a handler.

According to an embodiment, for use of another application, an application that was currently in the foreground state may be output in the form of a partial screen included as portion of the entire screen, reflecting the user's intention to continue using it. For example, an executing application may be output in the form of a pop-up window or floating form on the entire screen, and an example of such an output method is a picture in picture (PIP) method. This type of execution screen may be referred to by terms such as window, pop-up window, PIP, view, or pop-up view, and the terms may not be limited thereto.

According to an embodiment, the processor 220 may move the window 310 based on a user input 391 to the handler 311. For example, the user input 391 may include a touch gesture (e.g., touch and drag input, flick input). If the user input 391 includes a touch and drag input, while the handler 311 is selected and the user input 391 is maintained, the window 310 may be moved and arranged according to a movement trajectory 395 of the user input 391. Movement of the window 310 may end when the user input 391 is released.

On the other hand, when the user input 391 includes a flick input, the processor 220 may detect the direction of the flick input, such as a gesture like swiping to the right. When the direction of the flick input is detected, the processor 220 may move the window 310 to the right. For example, the window 310 may be moved and arranged to the edge of the display 260 according to the direction of the flick input.

Meanwhile, while the disclosure mainly describes examples where the user input 391 is a touch gesture such as touch and drag input or flick input, the type of user input is not limited thereto. The user input 391 may also be an input by an input device (e.g., stylus pen, mouse). For example, in the electronic device 201 receiving input by a mouse, formation of the user input 391 may be a mouse click, and release of the user input 391 may be a click release. As another example, in the electronic device 201 receiving input by a stylus pen, formation of the user input 391 may be a touch using a stylus pen, and release of the user input 391 may be a touch release using a stylus pen. The movement trajectory 395 may be a path along which a pointer (e.g., mouse cursor) moves while clicked.

Meanwhile, as illustrated in FIG. 3, the area occupied by the handler 311 in the window 310 may be relatively small compared to the total display area of the window 310. Moreover, when the window 310 is moved and arranged to the edge of the display 260, since a partial area of the window 310 is exposed through the display 260 and the remaining area of the window 310 is moved outside the display 260 and not exposed, the size of the visually exposed partial area of the window 310 may be relatively very limited. Accordingly, since the handler 311 displayed in the partial area of the window 310 is also located at the edge of the display 260, user manipulation may be difficult. Therefore, in an embodiment, an electronic device, its operating method, and a storage medium for moving an execution screen of an application may be provided so that manipulation of a handler for moving a window corresponding to an execution screen of an application is facilitated.

In an embodiment, the electronic device 201 may adjust (or change) at least one of the position, shape, form, color, or size of a handler displayed within a window based on not only the position of the window but also at least one of a mounting type of the electronic device 201, connection to an input device, or a state of the electronic device 201.

According to an embodiment, a window may be moved according to a user input. For example, the processor 220 may move and arrange the window based on a user input to a handler displayed in the window. The user input may be a touch gesture requesting movement of the window. The user input may be, e.g., a touch and drag that selects and then moves the handler of the window, and other various inputs such as double tap, flick, and drag and drop may be possible.

According to an embodiment, the processor 220 may output (or display) a first handler for moving the window through the display 260 on a first portion of a window corresponding to an execution screen of an application. For example, the first portion of the window may be the upper portion (or top area) of the window. The processor 220 may identify (or detect) an input (e.g., user input) to the first handler. The processor 220 may move the window based on the input to the first handler. The processor 220 may move the window corresponding to a trajectory along which the input to the first handler moves. For example, when the input to the first handler is touch and drag, the processor 220 may move the window along a path from the touched position to the point where it is released after dragging. The processor 220 may identify the changed position of the window according to the movement of the window based on the point where the drag is released. When moving the window, the processor 220 may identify whether at least a portion of the window goes beyond the displayable area of the display 260, i.e., an adjacent edge (or boundary) of the display 260.

For example, the processor 220 may identify whether the first handler displayed on the first portion of the window approaches an adjacent edge of the display 260 as the window moves.

In an embodiment, rather than simply moving and disposing the first handler according to the movement of the window, when the window is disposed at a changed position of the window, e.g., a position where user manipulation is difficult, the electronic device may induce easier user selection by changing and displaying at least one of the arrangement position, form, size, or color of the handler within the window.

According to an embodiment, the processor 220 may identify whether a distance between the first handler displayed on the first portion of the window and an adjacent edge of the display 260 is less than a threshold distance. When the distance between the first handler and the adjacent edge of the display 260 is less than the threshold distance, the processor 220 may control the first handler displayed on the first portion of the window to be displayed on the second portion of the window. When moving and disposing the first handler from the first portion to the second portion, the processor 220 may change it to a second handler for display. Here, the second handler may be one in which at least one of the shape, color, or size of the first handler has been changed.

According to an embodiment, the processor 220 may identify whether a reference line of the window (e.g., edge of the window, window frame, or central axis dividing the window in half) approaches an edge of the display 260.

According to an embodiment, the processor 220 may also identify how much the area occupied by the window deviates from the edge of the display 260. For example, when a partial area of the window is exposed (or displayed) through the display 260 and the remaining area is not displayed (or removed or hidden) according to the movement of the window, the processor 220 may compare the size of the exposed area of the window with a threshold size and, when the size of the exposed area becomes smaller than the threshold size, perform an operation to move and arrange the first handler from the first portion to the second portion of the window.

As described above, when moving the window, the condition serving as a criterion for controlling the operation of displaying the second handler on the second portion of the window instead of the first handler displayed on the first portion of the window may be at least one or a combination of two or more of: the threshold distance between the first handler and an adjacent edge of the display 260, the threshold distance between a reference line within the window and an adjacent edge of the display 260, and/or a comparison result between the exposed area of the window and a threshold size, and the condition serving as the criterion may not be limited thereto.

According to an embodiment, the processor 220 may identify the changed position of the window according to the movement of the window and identify the distance from the edge of the display 260 and the distance to the window according to the changed position. Based on the changed position of the window, the processor 220 may control to display the second handler on the second portion of the window instead of the first handler displayed on the first portion of the window. Here, the first portion may be the upper portion of the window, and the second portion may be any one of the lower portion, left portion, right portion, or corner of the window. For example, when the changed position of the window corresponds to a corner of the display 260, the second handler may be displayed at the corner of the window.

According to an embodiment, the second handler is one in which at least one of the shape, color, or size of the first handler has been changed, and may also differ from the arrangement position of the first handler. Here, when displaying the second handler, at least one of an object representing an executing application corresponding to the window or a progress state of the executing application may be displayed within the second handler or at a position adjacent to the second handler. By displaying the second handler in which at least one of the position, shape, form, color, or size of the first handler has been adjusted (or changed) in this way, users may more easily select and use the handler.

In an embodiment, while a case of changing and displaying at least one of the shape, color, or size of the handler while redisposing the handler within the window to facilitate user selection based on the changed position of the window is described as an example, at least one of the color effect or saturation of the handler may be changed. For example, not only the color and saturation filling the handler but also various graphic elements may be changed differently, and the graphic elements may not be limited thereto.

Further, by displaying an object indicating the type of application being executed along with the second handler, users may know which application is being executed through the area where only a portion of the window is exposed. Further, by displaying the progress state of the executing application along with the second handler, users may easily identify the current operation state.

Meanwhile, while the describes a case of changing and displaying graphic elements including the arrangement position of the handler within the window based on the changed position of the window as an example, the conditions for changing the handler used to move the window may not be limited thereto.

In an embodiment, the processor 220 may include conditions for changing the handler such as the position, size, or form of the handler when a circumstance occurs where at least a portion of the window is covered even when the position of the window does not change. For example, when at least a portion of the window is covered due to movement of another window, the processor 220 may identify at least a portion (or area) of the window that is not covered by the other window, i.e., the portion visually exposed to the outside (or the portion of the window displayed through the display 260).

In an embodiment, the processor 220 may identify the second portion of the window where the remaining portion is exposed excluding the covered portion as at least a portion of the window is covered, and may move and arrange the handler that was displayed on the first portion of the window to the second portion of the window. In an embodiment, the handler displayed on the second portion of the window may vary in at least one of the position, shape, form, color, or size of the handler according to the form and/or size of the exposed second portion of the window.

For example, the processor 220 may identify the form and/or size of the exposed second portion of the window and display the handler at the longer side position among the corner edges of the second portion. For example, the handler displayed on the long side of the second portion may be a bar-type handler in the form of ' | ' or '-'. For example, when each of the corner edges of the second portion has a length less than a threshold, the processor 220 may display the handler in the direction of the visually exposed corner. The processor 220 may bend and display the handler to facilitate user selection based on the form and/or size of the corner of the second portion. For example, the handler displayed at the corner of the second portion may be an angle bracket-type handler in the form of ' 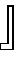 ' or ' 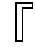 '.

By displaying the handler in the direction of the edge that is visually most exposed within the window in this way, user selection of the handler may be easier.

Meanwhile, in an embodiment, when identifying the exposed second portion of the window as at least a portion of the window is covered, the processor 220 may identify the mounting state of the electronic device 201. Based on identifying the mounting type, the processor 220 may control to display the second handler on the exposed second portion of the window through the display 260. For example, when the mounting type of the electronic device is a standing type, the processor 220 may identify the standing angle. The processor 220 may display graphic elements (e.g., size (or thickness)) for the second handler differently according to the identified standing angle.

In an embodiment, when identifying the exposed second portion of the window as at least a portion of the window is covered, the processor 220 may identify connection to an input device. Based on identifying the connection to the input device, the processor 220 may control to display the second handler on the exposed second portion of the window through the display 260. In an embodiment, the input device may include at least one of a stylus pen or a mouse. For example, when connected to an input device, the processor 220 may adjust and display graphic elements of the handler to facilitate selection by the input device when displaying the handler in the window.

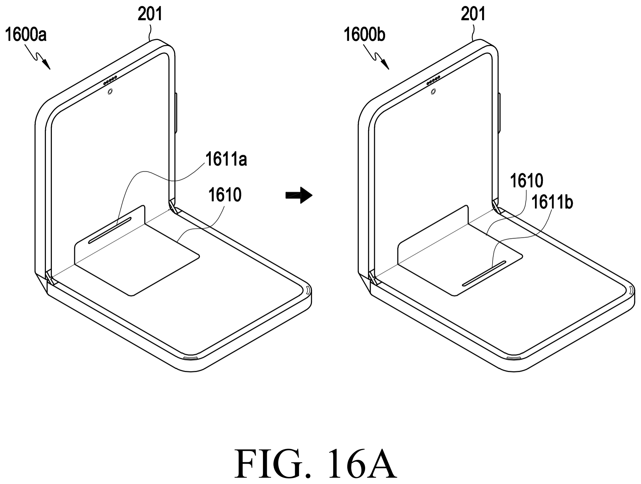

In an embodiment, when identifying the exposed second portion of the window as at least a portion is covered, the processor 220 may identify the state of the electronic device 201. Based on identifying the identified state of the electronic device, the processor 220 may control to display the second handler on the exposed second portion of the window through the display 260. For example, in the case of an electronic device including a flexible display, the processor 220 may identify that the state of the electronic device is a folded state. If the window is displayed spanning across the folding axis, the position of the handler within the window may be adjusted and displayed to a position that facilitates user selection. Further, in the case of an electronic device including a rollable display, the processor 220 may identify the state of the electronic device and identify that the state of the electronic device is a state in which the rollable display is rolling. Based on the state of the electronic device, the processor 220 may adjust and display the position of the handler within the window to a position away from the direction in which the rollable display is rolling. A detailed description of this is provided later in FIGS. 16A to 17B.

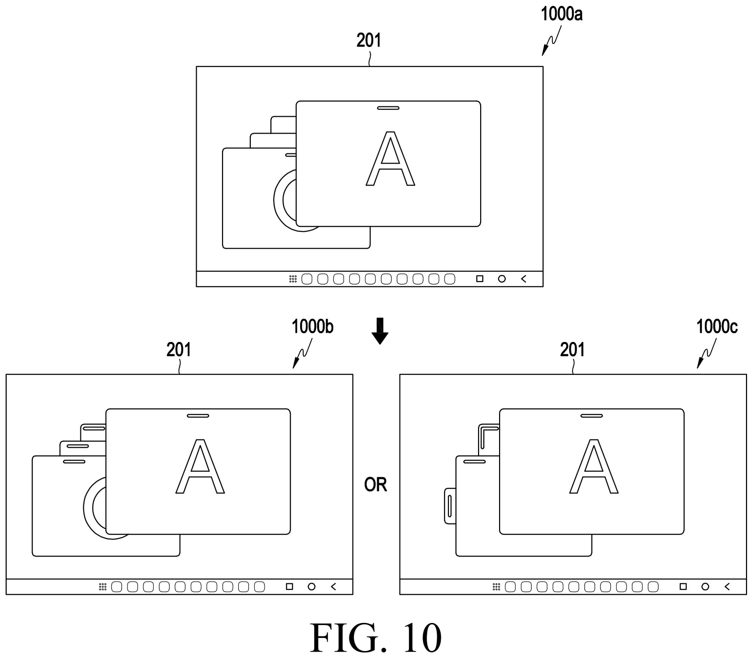

In an embodiment, when windows for multiple executing applications are displayed simultaneously, the processor 220 may rearrange the handler within each window to facilitate movement of each window. To that end, in case that at least one other application is executing, the processor 220 may control to display each handler in non-overlapping portions within the windows so that handlers within windows corresponding to respective execution screens of the at least one other application do not overlap each other. A detailed description of this is provided later in FIGS. 10 to 11C.

As described above, according to an embodiment, based on when the position of the window changes according to the movement of the window and at least a portion of the window is covered, or when at least a portion of the window is covered by another window even when the window does not move, by displaying graphic elements for the handler differently, accessibility to the handler for moving the executing application may be enhanced and visibility may also be enhanced.

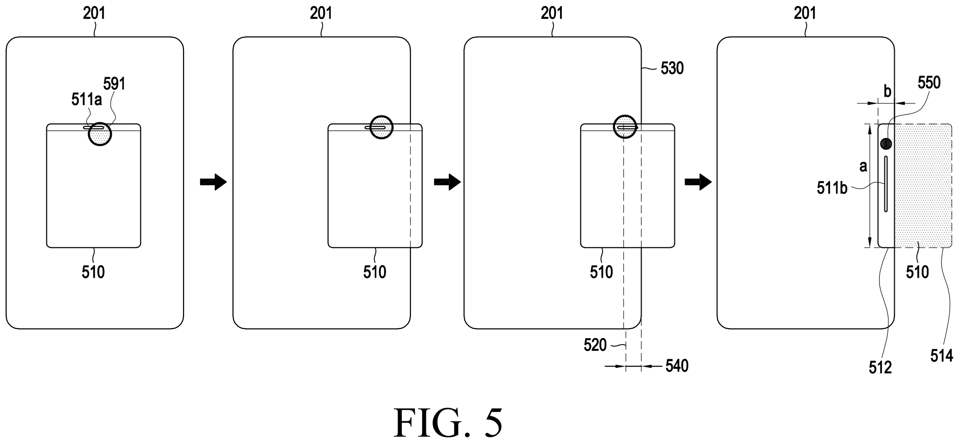

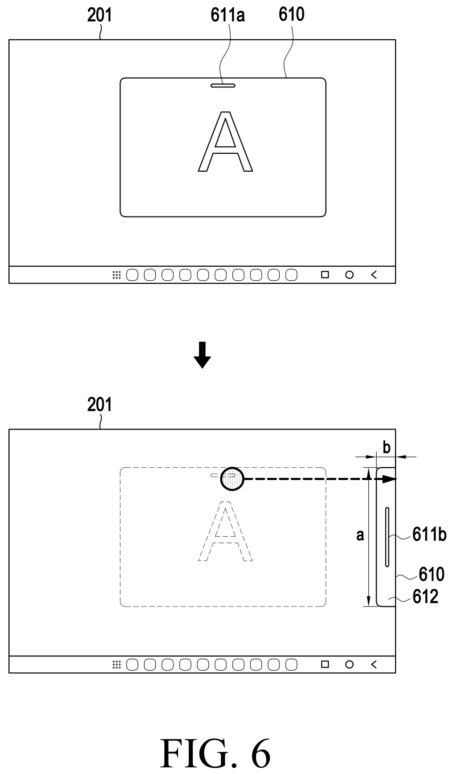

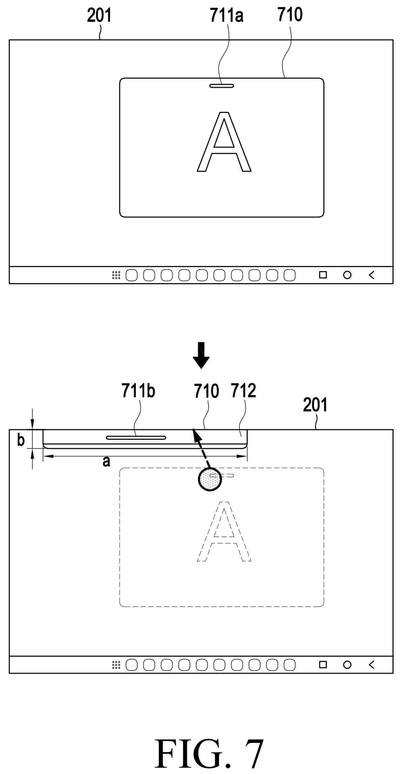

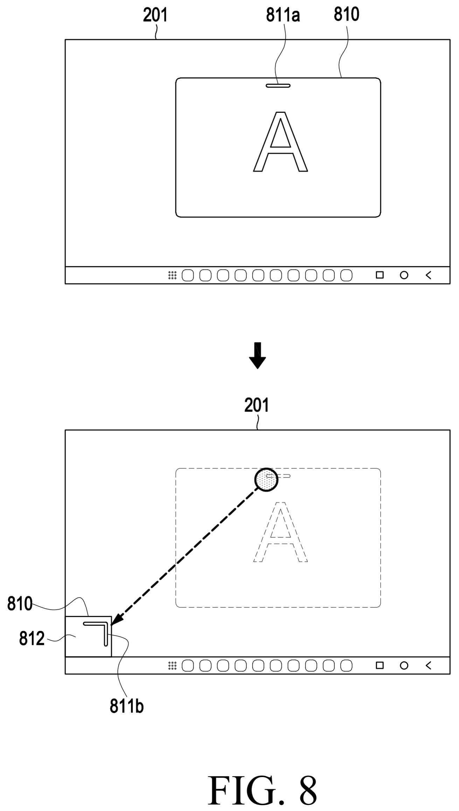

According to an embodiment, an electronic device 101, 201 may include a display 160, 260, at least one processor 120, 220 operatively connected to the display, and memory 130, 230 operatively connected to the at least one processor. According to an embodiment, the memory may store instructions configured to cause the electronic device, when executed, to display a first handler (e.g., 511a of FIG. 5, 611a of FIG. 6, 711a of FIG. 7, 811a of FIG. 8) for moving the window on a first portion of a window (e.g., 510 of FIG. 5, 610 of FIG. 6, 710 of FIG. 7, 810 of FIG. 8) corresponding to an execution screen of an application through the display. According to an embodiment, the instructions may be configured to cause the electronic device to identify at least one of a size, a position, or an orientation of an exposed second portion (e.g., 512 of FIG. 5, 612 of FIG. 6, 712 of FIG. 7, 812 of FIG. 8) of the window as at least a portion of the window is covered. According to an embodiment, the instructions may be configured to cause the electronic device to determine a position and a size to display a second handler 511b, 611b, 711b, 811b based on at least one of the size, the position, or the orientation of the exposed second portion of the window. According to an embodiment, the instructions may be configured to cause the electronic device to display the second handler (e.g., 511b of FIG. 5, 611b of FIG. 6, 711b of FIG. 7, 811b of FIG. 8) on the exposed second portion of the window through the display based on the determined position and size of the second handler 511b, 611b, 711b, 811b.

According to an embodiment, the instructions may be configured to cause the electronic device to display the second handler at a longer side position among corner edges of the exposed second portion based on at least one of the size, the position, or the orientation of the exposed second portion of the window in case that the window is located at a corner of the display.

According to an embodiment, the instructions may be configured to cause the electronic device to bend and display the second handler in case that the window is located at a corner of the display and each of the corner edges of the exposed second portion has a length less than a threshold based on at least one of the size, the position, or the orientation of the exposed second portion of the window.

According to an embodiment, the instructions may be configured to cause the electronic device to cause at least a portion of the window to be covered by movement of the window based on an input to the first handler or by movement of another window, and may be configured to control the display to display the second portion of the window as exposed and not display the remaining portion of the window as at least a portion of the window is covered.

According to an embodiment, the instructions may be configured to cause the electronic device to display the second handler on the exposed second portion of the window instead of the first handler when a distance between the first handler displayed on the first portion of the window and an adjacent edge of the display is less than a threshold distance by moving the window based on an input to the first handler.

According to an embodiment, the instructions may be configured to cause the electronic device to display the second handler with at least one of the shape, the color, or the size of the first handler changed.

According to an embodiment, the instructions may be configured to cause the electronic device to display at least one of an object representing an executing application corresponding to the window or a progress state of the executing application within the second handler or at a location adjacent to the second handler.

According to an embodiment, the instructions may be configured to cause the electronic device to identify at least one of a mounting type of the electronic device or a connection to an input device when identifying the exposed second portion of the window, and display the second handler on the exposed second portion of the window through the display based on identifying the mounting type or the connection to the input device.

According to an embodiment, the instructions may be configured to cause the electronic device to identify a state of the electronic device when identifying the exposed second portion of the window, and display the second handler on the second portion of the window through the display based on identifying the state of the electronic device.

According to an embodiment, the instructions may be configured to cause the electronic device to display each handler in non-overlapping portions within the windows so that handlers within windows corresponding to respective execution screens of the at least one other application do not overlap each other in case that at least one other application is executing.

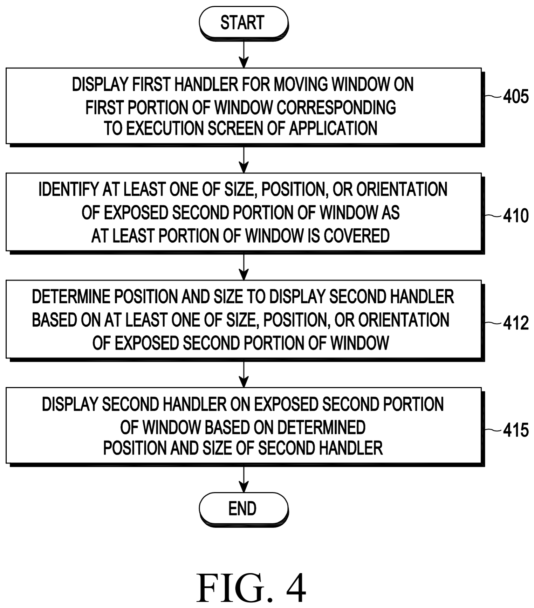

FIG. 4 is an operation flowchart of an electronic device for moving an execution screen of an application according to an embodiment.

Referring to FIG. 4, the operation method may include operations 405 to 415. Each operation of the operating method of FIG. 4 may be performed by an electronic device (e.g., the electronic device 101 of FIG. 1, the electronic device 201 of FIG. 2) or at least one processor of the electronic device (e.g., the processor 120 of FIG. 1, the processor 220 of FIG. 2). In an embodiment, at least one of operations 405 to 415 may be omitted, the order of some operations may be changed, other operations may be added, and at least two operations may be performed in parallel. Further, for better understanding of the description in FIG. 4, reference is made to FIGS. 5 to 8.

In operation 405, the electronic device 201 may display a first handler (e.g., 511a of FIG. 5, 611a of FIG. 6, 711a of FIG. 7, 811a of FIG. 8) for moving the window on a first portion of a window (e.g., 510 of FIG. 5, 610 of FIG. 6, 710 of FIG. 7, 810 of FIG. 8) corresponding to an execution screen of an application through the display 260. As illustrated in FIG. 5, a first handler 511a may be displayed on the first portion (e.g., upper portion) of the window 510 of an executing application.

The electronic device 201 may identify an exposed second portion (e.g., 512 of FIG. 5, 612 of FIG. 6, 712 of FIG. 7, 812 of FIG. 8) of the window as at least a portion of the window is covered.

In operation 410, according to an embodiment, the electronic device 201 may identify at least one of a size, a position, or an orientation of the exposed second portion (e.g., 512 of FIG. 5, 612 of FIG. 6, 712 of FIG. 7, 812 of FIG. 8) of the window as at least a portion of the window is covered.

In operation 412, according to an embodiment, the electronic device 201 may determine a position and a size to display a second handler 511b, 611b, 711b, 811b based on at least one of the size, the position, or the orientation of the exposed second portion of the window.

According to an embodiment, at least a portion of the window may be covered by movement of the window based on an input to the first handler. Further, at least a portion of the window may be covered by movement of another window. In other words, at least a portion of the window may be covered without position movement of the window.

First, referring to FIG. 5 for movement of a window based on an input to the first handler, the electronic device 201 may move the window 510 according to an input 591 to the first handler 511a. Here, the input 591 may include a touch gesture such as touch and drag input or flick input (or touch flick input). Further, the input 591 may include not only input by a user's body (e.g., finger) but also input by an input device (e.g., stylus pen, mouse). For example, when the input 591 is a touch and drag input, while the input 591 to the first handler 511a is maintained, the window 510 may be moved according to the movement trajectory of the input 591. Subsequently, the movement of the window 510 may end in response to the release of the touch and drag input.

While the window 510 is moved according to the movement trajectory of the input 591, the electronic device 201 may identify the distance between at least a portion of the window 510 and an adjacent edge 530 of the display 260 (e.g., display screen). For example, the electronic device 201 may identify whether the first handler 511a of the window 510 approaches an adjacent edge 530 of the display 260. Or the electronic device 201 may identify whether the outer boundary (or border) of the window 510 approaches the edge 530 of the display 260. When at least a portion of the window 510 approaches the edge 530 of the display 260 in this way, a partial area 512 of the window 510 may be exposed through the display 260 and the remaining area 514 of the window 510 may not be exposed.

For example, as illustrated in FIG. 5, when moving the window 510 toward the edge 530 of the display 260 according to the touch and drag direction, the remaining area 514 except for the partial area 512 of the window 510 may not be displayed. Here, the partial area 512 may be referred to as an exposed area, and the remaining area 514 may be referred to as a hidden area.

Further, while FIG. 5 describes a case where the remaining area 514 of the window 510 is not displayed according to the movement of the window 510 as an example, the window 510 itself may be decreased and displayed to a size corresponding to the size of the partial area 512. As such, the method of displaying the window 510 when the window 510 is adjacent to the edge 530 of the display 260 may not be limited thereto.

As illustrated in FIG. 5, when a distance 540 between a reference line 520 based on the first handler 511a and an adjacent edge 530 of the display 260 reaches less than a threshold distance, the electronic device 201 may not display the remaining area 514 except for the partial area 512 of the window 510.

In operation 415, the electronic device 201 may display a second handler (e.g., 511b of FIG. 5, 611b of FIG. 6, 711b of FIG. 7, 811b of FIG. 8) on the exposed second portion (e.g., 512 of FIG. 5, 612 of FIG. 6, 712 of FIG. 7, 812 of FIG. 8) of the window through the display 260 based on the determined position and size of the second handler 511b, 611b, 711b, 811b. For example, as illustrated in FIG. 5, the electronic device 201 may display the second handler 511b instead of the first handler 511a on the second portion (e.g., left side of the window) 512 of the window 510.

As illustrated in FIG. 5, when the size of the partial area 512 exposed while adjacent to the edge 530 of the display 260 becomes relatively very small according to the movement of the window 510, the electronic device 201 may display the second handler 511b with at least one of the arrangement position, form, size, or color of the first handler 511a changed to facilitate user selection. For example, the electronic device 201 may display the second handler 511b moved and arranged from the first portion (e.g., upper portion) of the window 510 to the second portion (e.g., left side of the window) of the window 510, and may also change and display the size of the second handler 511b to correspond to the second portion 512. Here, the area (or size) of the second portion may be larger than the area of the first portion. Accordingly, the size of the second handler 511b may have a size occupying at least a portion of the second portion 512 having a larger area than the first portion to facilitate user manipulation. Further, in an embodiment, as the size of the partial area 512 of the window 510 becomes very small, the electronic device 201 may display an object 550 related to the application adjacent to the second handler 511b so that the user may easily identify the executing application. The object 550 related to the application may be for representing the executing application or at least one of the progress states of the application.

According to an embodiment, the first portion is the upper portion of the window, and the second portion may be any one of the lower portion, left portion, right portion, or corner of the window.

According to an embodiment, in case that the window is located at a corner of the display 260, the electronic device 201 may display the second handler at a longer side position among corner edges of the exposed second portion based on at least one of the size, the position, or the orientation of the exposed second portion of the window. For example, the second handler displayed on the long side of the second portion may be a bar-type handler in the form of '| ' or '-'.

According to an embodiment, in case that the window is located at a corner of the display 260 and each of the corner edges of the exposed second portion has a length less than a threshold based on at least one of the size, the position, or the orientation of the exposed second portion of the window, the electronic device 201 may bend and display the second handler. For example, the display 260 may be controlled to display the second handler at the corner of the exposed portion of the window. For example, for a window disposed at a corner of the display 260, since only the corner of the window is exposed, the electronic device 201 may arrange an angle bracket-type handler in the form of ' 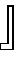 ' or ' 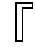 ' corresponding to the exposed corner surface to make it easier to move the window.

According to an embodiment, the electronic device 201 may control at least a portion of the window to be covered by movement of the window based on an input to the first handler or by movement of another window. The electronic device 201 may control the display 260 to display the second portion of the window as exposed and not display the remaining portion of the window as at least a portion of the window is covered.

According to an embodiment, the electronic device 201 may display the second handler with at least one of the shape, the color, or the size of the first handler changed.

According to an embodiment, the electronic device 201 may control the display 260 to display at least one of an object representing an executing application corresponding to the window or a progress state of the executing application within the second handler or at a location adjacent to the second handler.

According to an embodiment, when identifying the exposed second portion of the window as at least a portion of the window is covered, the electronic device 201 may identify at least one of a mounting type of the electronic device 201 or a connection to an input device. Referring to FIG. 5, based on identifying the mounting type or the connection to the input device, the electronic device 201 may display the second handler 511b on the exposed second portion 512 of the window through the display 260.

For example, when the electronic device 201 is mounted in a standing state, when moving the window to the lower portion of the display 260, selection of the handler may not be as easy compared to when the window is disposed on the right and left portions, so when the window moves to the lower portion in the standing state, the electronic device 201 may control to change and display graphic elements such as the size and form of the handler within the window to make user selection easier.

Further, when connected to an input device in the electronic device 201, the electronic device 201 may adjust and display graphic elements of the handler to facilitate selection by the input device when displaying the handler in the window.

According to an embodiment, when identifying the exposed second portion of the window as at least a portion of the window is covered, the electronic device 201 may identify the state of the electronic device. Based on identifying the identified state of the electronic device, the electronic device 201 may display the second handler on the exposed second portion of the window through the display 260.

The position and form of the handler may be varied to facilitate selection and manipulation of the handler by the user. This is described in detail with reference to FIGS. 6 to 8. FIG. 6 is a view illustrating a handler displayed on a portion (e.g., left side) of a window according to an embodiment, FIG. 7 is a view illustrating a handler displayed on a portion (e.g., lower portion) of a window according to an embodiment, and FIG. 8 is a view illustrating a handler displayed on a portion (e.g., corner) of a window according to an embodiment.

Referring to FIG. 6, a first handler 611a for moving the window 610 may be displayed on the first portion (e.g., upper portion of the window) of the window 610 corresponding to an execution screen of an application. As the user moves the window 610 beyond the right edge of the display 260 using the first handler 611a, the second portion (e.g., left side of the window) 612 of the window 610 may be visually exposed. According to the movement of the window 610, the changed position of the window 610 may correspond to a position partially contacting the right side of the display 260. Based on the changed position of the window 610, the electronic device 201 may display the second handler 611b instead of the first handler 611a on the second portion (e.g., left side of the window) 612 of the window 610 by changing the position of the first handler 611a. For example, the electronic device 201 may arrange the second handler 611b within the window 610 on the longest edge surface (or long side position) (a) rather than the shortest edge surface (or short side position) (b) within the exposed area of the window 610.

While FIG. 6 describes a case where the changed position of the window 610 corresponds to a position partially contacting the right side of the display 260 as an example, the window 610 may contact at least one portion of the top, bottom, left, or right side of the display 260. For example, when moving the window 610 beyond the left edge of the display 260, the second portion (e.g., right side of the window) of the window 610 may be visually exposed, and in this case as well, the second handler 611b may be displayed on the long side portion.

Further, the position of the window 610 may be elsewhere. For example, the window 610 may contact a portion of a corner of the display 260.

Referring to FIG. 7, when moving the window 710 beyond the upper edge of the display 260 using the first handler 711a displayed on the first portion (e.g., upper portion of the window) of the window 710, the second portion (e.g., lower portion of the window) 712 may be visually exposed.

According to an embodiment, as illustrated in FIG. 7, the changed position of the window 710 according to the movement of the window 710 may correspond to a position partially contacting the top side of the display 260. The electronic device 201 may display the second handler 711b on the longest edge surface (or long side position) (a) rather than the shortest edge surface (or short side position) (b) within the exposed area of the exposed second portion 712 within the window 710, for example.

Referring to FIG. 8, when moving the window 810 to any one of the four corners of the display 260 using the first handler 811a displayed on the first portion (e.g., top) of the window 810, the second portion (e.g., corner of the window) 812 may be visually exposed. According to an embodiment, as illustrated in FIG. 8, the changed position of the window 810 according to the movement of the window 810 may correspond to a position partially contacting a corner of the display 260.

According to an embodiment, when the changed position of the window 810 corresponds to a corner of the display 260, the electronic device 201 may display the second handler 811b at the corner of the window 810. Here, when the window 810 is positioned at a corner, only the corner area of the window 810 may be exposed. According to an embodiment, when each of the corner edges of the exposed second portion 812 within the window 810 has a length less than a threshold, the electronic device 201 may bend and display the second handler 811b at the corner of the second portion 812. According to an embodiment, the electronic device 201 may adjust various graphic elements such as the form and size of the second handler based not only on the length of each edge of the exposed second portion 812 but also on each vertex. For example, when only one of the four vertices of the window 810 is exposed, an angle bracket-type handler in the form of ' 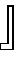 ' or ' 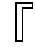 ' may be displayed on the exposed portion and, when two or more vertices are exposed, a bar-type handler in the form of '| ' or '-'.

To increase the possibility of user selection, the electronic device 201 may adjust various graphic elements such as form and size as well as position assignment of the second handler 811b to correspond to the touch area when the user touches the second handler 811b with a finger, for example.

In an embodiment, in FIGS. 6 to 8, the length of the handlers (611b, 711b, 811b) may be equal to or less than the length of the surface on which the handlers (611b, 711b, 811b) are disposed within each window (610, 710, 810).

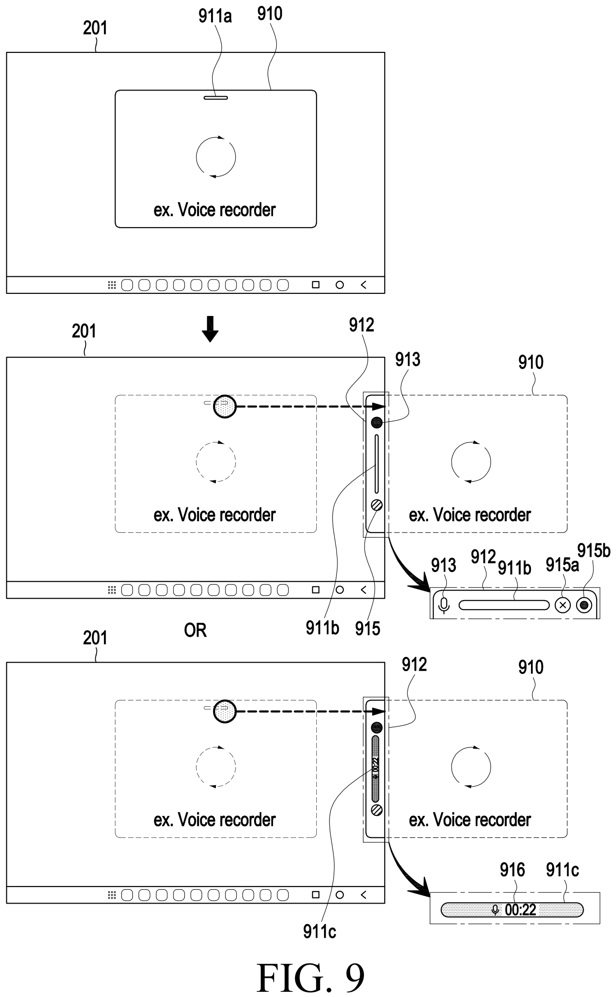

FIG. 9 is a view illustrating a handler and an object related to the window according to movement of a window according to an embodiment.

Referring to FIG. 9, the electronic device 201 may display a screen (e.g., user interface) of an application through the window 910. The electronic device 201 may provide at least a portion of content provided by an application to at least a portion of the display 260 through the window 910 of a desired size. Compared to a state in which the execution screen of an application is displayed to occupy the entire display 260, the execution screen of the application displayed through the window 910 may include only partial content of the execution screen. For example, when the executing application is a voice recorder application, the window 910 may provide at least some of the content, information provided by the application, or functions (or objects, menus, icons) such as start, stop, resume, or end for controlling the application.

When the window 910 moves to an adjacent edge of the display 260 in response to user selection of the handler 911a, the handler 911b for moving the window 910 may be redisposed within the exposed area 912 of the window 910. The electronic device 201 changes the size and/or arrangement position of the first handler 911a displayed in the window 910 to change it to the second handler 911b, and the size of the second handler 911b may be larger than the size of the first handler 911a. The handler 911b displayed within the window 910 may have not only the position of the handler 911b but also graphic elements such as size, form, or color determined based on the position of the window 910.

In an embodiment, the exposed area 912 of the window 910 may include minimal content or minimal functions when compared to the window 910 before being moved. For example, the window 910 contacting a portion of an edge (e.g., right side) of the display 260 may be smaller in size or include fewer components (e.g., icons, objects, menus, etc.) than the window 910 before being moved. For example, it may include an icon 913 representing an executing application and action buttons 915a, 915b (or objects, menus, icons) such as recording start, play, and pause for controlling the application.

In an embodiment, content related to an executing (or playing) application (e.g., recording time, animation (GIF)) 916 may be displayed within the handler 911c. Applications that may display the execution state of an application using the handler 911c in this way may include a voice recorder application, an alarm application, a timer application, and a music playback application, and the types of applications are not limited thereto, and any application that may display an operation state may be possible.

FIG. 10 is a view illustrating handlers disposed according to movement of a window in a plurality of windows according to an embodiment.

Referring to FIG. 10, as illustrated in 1000a, the electronic device 201 may provide two or more windows through one display 260. Here, a screen of an application may be displayed simultaneously in each window, and the size and position of each window may be adjusted using a handler included in each window.

When multiple windows are displayed in a state in which they at least partially overlap, as illustrated in 1000a, handlers disposed in a predetermined portion (e.g., upper portion (or top) of the window) of each window may also overlap each other. Therefore, when two or more windows overlap each other, the handler within each window may be disposed at different positions from each other as illustrated in 1000b or 1000c.

As illustrated in 1000b, the electronic device 201 may align and display handlers within the top area of each window where the windows do not overlap each other. For example, the electronic device 201 may align the handlers to be positioned in the center of the top area, e.g., the exposed area, of each window.

Meanwhile, as illustrated in 1000c, when there is a window exposed to a size difficult to place a handler among overlapped windows, the electronic device 201 may move and arrange the handler to a corner of the window or a portion corresponding to the long side of the edge. Accordingly, even when windows overlap each other, users may independently move the desired window using the handler for the desired window using each handler. In this case, for a window overlapped at the lower surface of the windows, users may easily select and move the handler of the bottom window without having to move and arrange it so that the bottom window is exposed using handlers of other windows.

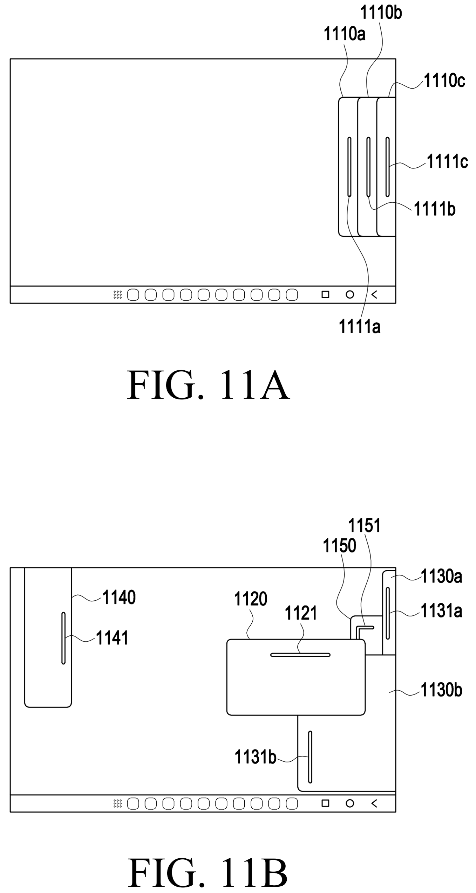

FIG. 11A is a view illustrating handlers disposed within a plurality of windows having a stacked structure according to an embodiment.

When there are multiple recently executed applications, the electronic device 201 may display a list of applications using windows. Referring to FIG. 11A, when two or more windows (1110a, 1110b, 1110c) are moved to the same position within the display 260, the electronic device 201 may provide handlers (1111a, 1111b, 1111c) for moving the windows (1110a, 1110b, 1110c) having a stacked structure. To that end, by disposing the most recently manipulated screen close to the edge of the display 260 and as the top layer, the electronic device 201 may facilitate selection of handlers (1111a, 1111b, 1111c) within the overlapped windows (1110a, 1110b, 1110c).

The electronic device 201 may determine the handlers (1111a, 1111b, 1111c) disposed in the windows (1110a, 1110b, 1110c) based on the area and/or form of the exposed area of each window (1110a, 1110b, 1110c). For example, the electronic device 201 may arrange handlers (1111a, 1111b, 1111c) on the exposed area of the stacked windows (1110a, 1110b, 1110c), e.g., on the long side. As illustrated in FIG. 11A, handlers may be disposed to correspond to the side having the maximum length among the upper/lower sides and left/right sides of the exposed area of each window (1110a, 1110b, 1110c). In this case, the size (or length) of the handler may extend to the length of the long side of the windows (1110a, 1110b, 1110c). As such, the electronic device 201 may increase the possibility of user selection of the handler by changing and displaying the size and/or position of the handler to correspond to the exposed area despite the small size of the exposed area of the windows due to the stacked structure.

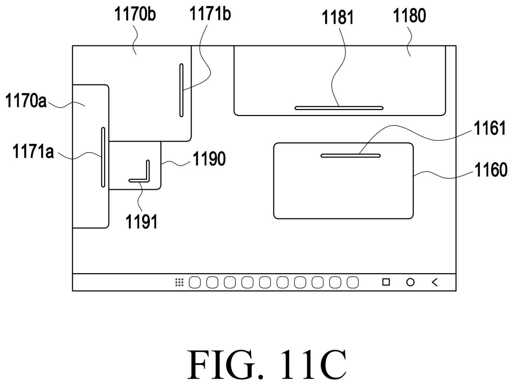

FIG. 11B is a view illustrating a case where handlers are disposed in a first manner within a plurality of windows having a partially overlapping structure according to an embodiment, and FIG. 11C is a view illustrating a case where handlers are disposed in a second manner within a plurality of windows having a partially overlapping structure according to an embodiment.

FIG. 11B illustrates the arrangement of handlers (1121, 1131a, 1131b, 1141, 1151) when two or more windows (1120, 1130a, 1130b, 1150) among multiple windows (1120, 1130a, 1130b, 1140, 1150) overlap each other. Further, FIG. 11C illustrates the arrangement of handlers (1161, 1171a, 1171b, 1181, 1191) when two or more windows (1170a, 1170b, 1190) among multiple windows (1160, 1170a, 1170b, 1180, 1190) overlap each other.

First, referring to FIG. 11B, in the case of the window 1120 disposed in the topmost layer, since the entire window 1120 is visually exposed through the display 260 without any covered portion, the handler 1121 may be disposed in the first portion (e.g., upper portion) of the window 1120. As such, when the entire window 1120 is visually exposed, the handler 1121 may be preferentially disposed in the first portion (e.g., upper portion).

On the other hand, in the case of windows (1130a, 1130b) positioned below the window 1120, only partial areas of each window (1130a, 1130b) may be visually exposed as at least a portion of each window (1130a, 1130b) approaches the edge of the display 260.

Similarly, referring to FIG. 11C, when the entire window 1160 is visually exposed, the handler 1161 may be disposed in the first portion (e.g., upper portion) of the window 1160, but when the first portion (e.g., upper portion) of the window 1180 is covered and only the lower portion is exposed, the handler 1181 may be disposed in the lower portion.

As described above, when windows are covered below a threshold as they overlap each other, the handler may be redisposed to the exposed area of the corresponding window.

In an embodiment, referring to FIG. 11B, the electronic device 201 may identify whether the size of the first portion (e.g., upper portion) of the windows (1130a, 1130b) is smaller than a threshold (or threshold size) (e.g., about 4 cm) for disposing the handler. For example, the threshold may be set to a minimum length of about 3 cm or a minimum ratio of 30%, or may be defined based on a distance from the edge of the display 260 (e.g., about 5 cm). In an embodiment, the threshold may be set differently according to the type of electronic device 201 or the size of the display 260 of the electronic device 201.

If the size of the first portion (e.g., upper portion) of the windows (1130a, 1130b) is less than the threshold size, the electronic device 201 may move and arrange the handler to the second portion (e.g., left side) of the windows (1130a, 1130b). In this case, the electronic device 201 may adjust and display at least one of the size, form, or color of the handler to increase user selectability and visibility while disposing the handler in the second portion that is relatively more widely exposed than the first portion.

In an embodiment, when the window 1140 does not overlap other windows (1120, 1130a, 1130b, 1150) but the size of the first portion (e.g., upper portion) of the window 1140 is less than the threshold size or is not visually exposed, the handler 1141 may be disposed in the second portion that is not the first portion, i.e., the second portion that is larger than the first portion. In this case, while FIG. 11B illustrates a case where the handler 1141 is preferentially disposed in the second portion (e.g., right side) of the window 1140, the handler 1141 may also be disposed in the second portion (e.g., left side). The position of the handler 1141 within the second portion may be changeable according to user settings (e.g., setting options menu).

In an embodiment, in the case of window 1150 where all edges of the exposed area are smaller than the threshold size, the handler 1151 may be disposed at the corner of the window 1150. For example, when all edges of the exposed area of the window 1150 are smaller than the threshold size, the handler 1151 may be disposed in the exposed area that is farthest from the edge or corner of the display 260 and does not overlap other windows (1120, 1130a, 1130b, 1150).

Meanwhile, referring to FIG. 11C, when at least portions of windows (1170a, 1170b, 1190) overlap each other, handlers (1171a, 1171b, 1191) may be disposed with different portions and forms according to the size of the exposed area of each window.

As described above, even when multiple windows overlap each other, the size and/or form of the handler disposed in the exposed area of each window may be determined based on at least one of the size or position of the exposed area.

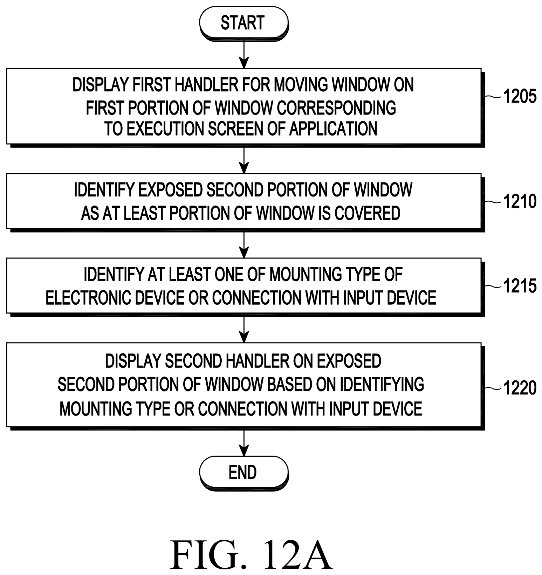

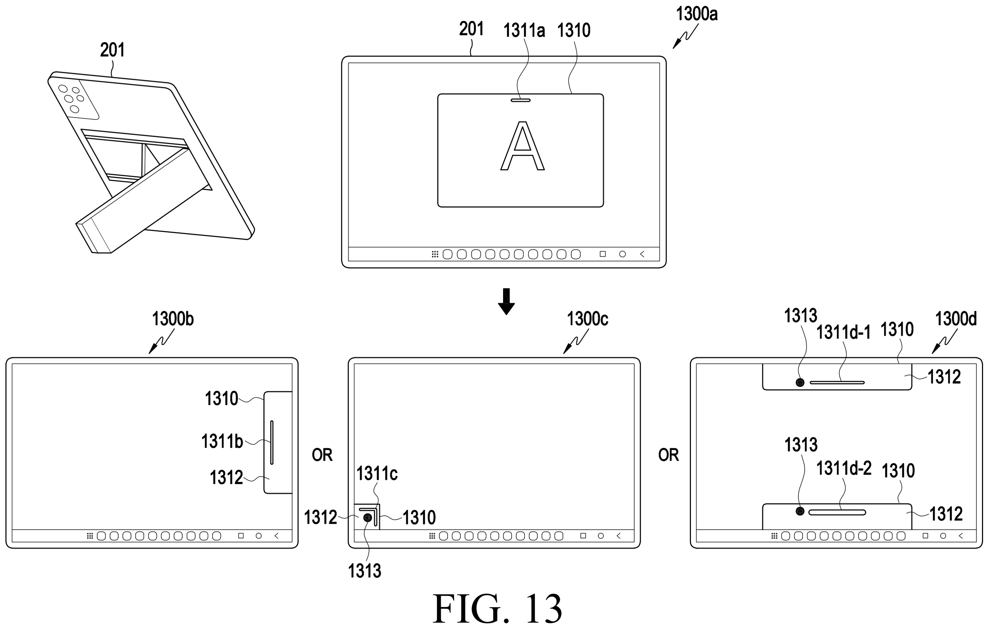

FIG. 12A is an operation flowchart of an electronic device based on a mounting type or connection to an input device according to an embodiment. Referring to FIG. 12A, the operating method may include operations 1205 to 1220. Each operation of the operating method of FIG. 12A may be performed by an electronic device (e.g., the electronic device 101 of FIG. 1, the electronic device 201 of FIG. 2) or at least one processor of the electronic device (e.g., the processor 120 of FIG. 1, the processor 220 of FIG. 2). In an embodiment, at least one of operations 1205 to 1220 may be omitted, the order of some operations may be changed, other operations may be added, and at least two operations may be performed in parallel. Further, for better understanding of the description in FIG. 12A, reference is made to FIGS. 13 to 15.

In operation 1205, the electronic device 201 may control to display a first handler for moving the window on a first portion of a window corresponding to an execution screen of an application. In operation 1210, the electronic device 201 may identify the changed position of the window according to the movement of the window based on an input to the first handler. Since operations 1205 and 1210 correspond to operations 405 and 410 of FIG. 4, their detailed descriptions is omitted.

In operation 1215, the electronic device 201 may identify at least one of a mounting type of the electronic device 201 or a connection to an input device.

In operation 1220, based on identifying the mounting type or the connection to the input device, the electronic device 201 may control to display a second handler on the exposed second portion of the window.

Referring to FIG. 13 to describe a display method of a handler based on a mounting type according to an embodiment, accessories such as holders and stands may be attached to and detached from the electronic device 201, and may be mounted in a standing state using the accessory. In the standing state (or standing mode), since the lower surface of the display 260 of the electronic device 201 is mounted in contact with the floor surface, a circumstance may occur where selection of the handler within the window is not easy closer to the lower surface of the display 260. Therefore, the electronic device 201 may identify the mounting type using at least one sensor of the electronic device 201 and, when the identified mounting type indicates a standing state, may adjust at least one of the position, size, form, and/or color of the handler for the window disposed at the lower surface of the display 260.

For example, as illustrated in 1300a, when the entire window 1310 is visually exposed, the handler 1311a may be preferentially disposed in the first portion (e.g., upper portion). However, when at least a portion of the window 1310 approaches the boundary of the display 260 as the window 1310 moves using the handler 1311a, the electronic device 201 may display the handler 1311b on the second portion (e.g., left side) 1312 of the window 1310 as illustrated in 1300b. On the other hand, when at least a portion of the window 1310 is positioned at a corner of the display 260 as illustrated in 1300c, the electronic device 201 may arrange the handler 1311c at the corner 1312 of the window 1310. In this case, when displaying the handler 1311c disposed at the exposed corner, the electronic device 201 may display a thick handler by adjusting graphic elements of the handler 1311c to widen the touch area for facilitating user selection. Further, since only the corner area of the window 1310 is exposed, an object (e.g., icon) 1313 related to the application may be displayed together so that the user may recognize the executing application.

Further, as illustrated in 1300d, when the window 1310 approaches the top or bottom boundary of the display 260 and only a portion is exposed, compared to the handler 1311d-1 within the exposed portion 1312 of the window 1310 positioned at the top of the display 260, the electronic device 201 may adjust and display graphic elements of the handler 1311d-2 to facilitate user selection of the handler 1311d-2 positioned at the lower surface of the display 260. For example, the electronic device 201 may display a thick handler by adjusting graphic elements of the handler 1311d-2 to widen the touch area. Here, an object (e.g., icon) 1313 related to the application may be displayed together at the portion where the handlers 1311d-1, 1311d-2 are located or at an adjacent position.

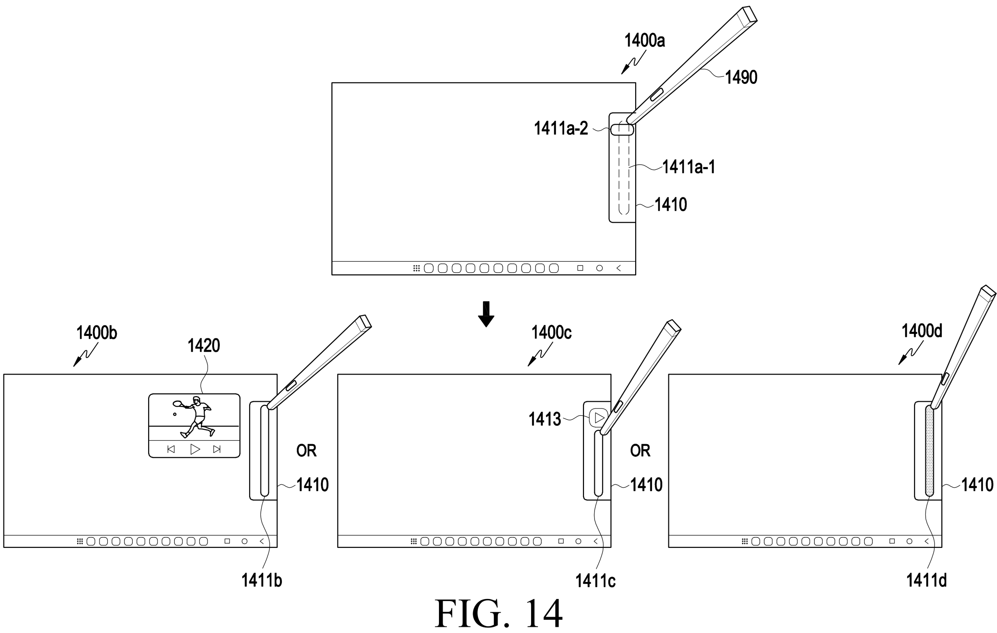

Referring to FIG. 14 to describe a display method of a handler based on connection to an input device (e.g., stylus pen) according to an embodiment, the electronic device 201 may identify an input device connected to the electronic device 201. For example, the electronic device 201 may identify whether an input device (e.g., stylus pen, mouse) rather than a user's finger is connected to the electronic device 201.

As illustrated in 1400a, when the input device is a stylus pen 1490, the electronic device 201 may arrange the handler 1411a-2 in the exposed area 1412 of the window 1410. Since the stylus pen 1490 may be relatively easy to select the handler through the tip or hovering input of the stylus pen 1490 even with a narrower touch area compared to a user's finger. Therefore, when an input device such as the stylus pen 1490 is connected, the electronic device 201 may display the handler 1411a-2 in the exposed area (e.g., upper portion) 1412 of the window 1410. If the input device is not connected, the electronic device 201 may display the handler 1411a-1 on the long surface (or long side position) of the exposed area 412 of the window 1410.

Meanwhile, when a portion of the window 1410 goes beyond the edge of the display 260 or a portion of the window 1410 is covered by another window so that only the remaining area of the window 1410 is exposed, the electronic device 201 may consider it a state in which manipulation to move the window with the handler displayed on the first portion (e.g., upper portion) is difficult. However, even when only a partial area of the window 1410 is exposed, when an input device such as the stylus pen 1490 is connected, precise selection of the handler 1411a-2 is possible and movement of the window 1490 by the stylus pen 1490 may be easy, so the position of the handler 1411a-2 within the window 1490 may be maintained.

In an embodiment, based on identifying an input device such as the stylus pen 1490, the electronic device 201 may temporarily enlarge and display the size to facilitate selection without changing the position of the handler 1411a-2 within the window 1490. For example, the electronic device 201 may temporarily enlarge and display the size of the handler 1411a-2 to a designated size (e.g., finger thickness) while hovering input by the stylus pen 1490 is detected through the window 1410. Or, while the hovering input is detected, the electronic device 201 may temporarily display the handler 1411a-1 to occupy most of the long surface (or long side position) of the exposed area 412 of the window 1410.

Meanwhile, according to an embodiment, the electronic device 201 may detect hovering input by the stylus pen 1490. Therefore, in response to detecting hovering input to the handler 1411a-2, as illustrated in 1400b, while hovering input to the handler 1411b is detected, the electronic device 201 may output (or display) a pop-up window 1420 associated with the executing application adjacent to the window 1410. The pop-up window 1420 may output a preview of the executing application. Further, as illustrated in 1400c, in response to hovering input to the handler 1411c, the electronic device 201 may display an object 1413 along with the handler 1411c so that the user may recognize the application being executed through the window 1410. Further, as illustrated in 1400d, the electronic device 201 may change and display the color of the handler 1411d to indicate that the handler 1411d is in a selectable state.

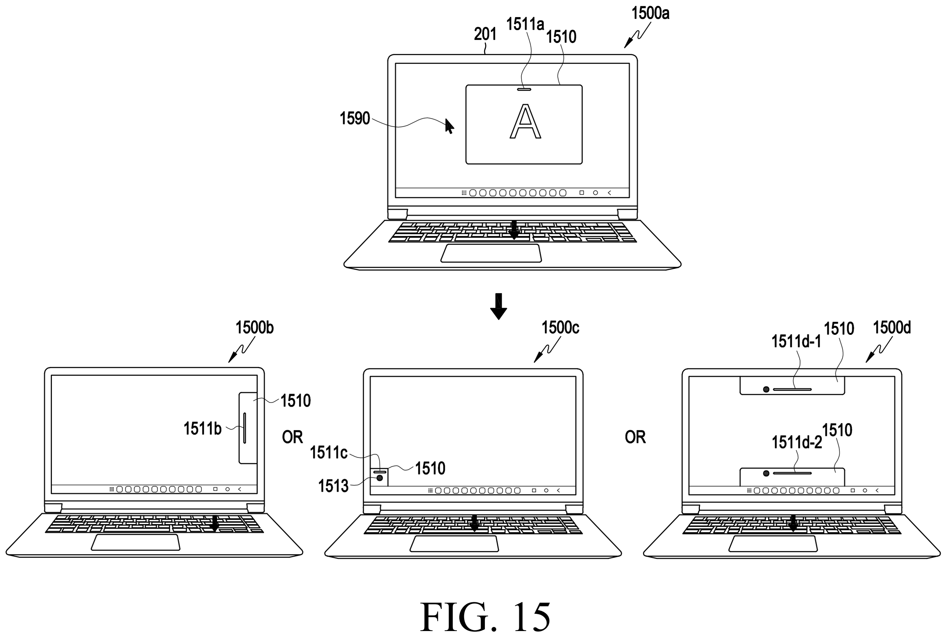

Referring to FIG. 15 to describe a display method of a handler based on connection to an input device (e.g., mouse) according to an embodiment, the electronic device 201 may identify whether an input device (e.g., stylus pen, mouse) rather than a user's finger is connected to the electronic device 201.

As illustrated in 1500a, when the input device is a mouse, an object 1590 representing the mouse may be displayed on the screen. The electronic device 201 may manipulate the handler 1511a within the window 1510 by manipulating the object 1590 representing the mouse. The window 1510 is moved and arranged according to the movement trajectory using the handler 1511a and, when at least a portion of the window 1510 is disposed beyond the edge of the display 260 as illustrated in 1500b, the electronic device 201 may change and display at least one of the position and/or size of the handler 1511b within the window 1510.

However, even when only a partial area of the window 1510 is exposed, when an input device such as a mouse is connected, selection of the handler 1511a may be easy, so the position of the handler 1511a within the window 1510 may be maintained as disposed at the top of the window 1510 as in 1500a. Further, in an embodiment, even when an input device such as a mouse is connected, considering the changed position of the window 1510 according to the movement of the window 1510, at least one of the arrangement position, size, and/or form of the handler 1511b may be changed and displayed as in 1500b. For example, when displaying a handler within the window 1510, the electronic device 201 may determine at least one of the arrangement position, size, and/or form of the handler based on identifying the connection to the input device along with the changed position of the window 1510. If the changed position of the window 1510 takes priority over the input device, at least one of the arrangement position, size, and/or form of the handler 1511b may be changed and displayed as in 1500b.

On the other hand, when at least a portion of the window 1510 is positioned at a corner of the display 260 as illustrated in 1500c, the electronic device 201 may arrange the handler 1511c at the corner of the window 1510. Here, an object (e.g., icon) 1513 related to the application may be displayed together at the portion where the handler 1511c is located or at an adjacent position. The size of the handler 1511c within the window 1510 in 1500c of FIG. 15 may differ in at least one of arrangement position, size, or form compared to the handler 1311c in 1300c of FIG. 13. For example, when the input device is a mouse as in FIG. 15, since more precise selection is possible compared to touch by a user's finger in FIG. 13, the size of the handler 1511c may be smaller than the size of the handler 1311c in 1300c.

Further, as illustrated in 1500d, when the window 1510 approaches the top or bottom boundary of the display 260 and only a portion is exposed, the handler 1511d-1 within the window 1510 positioned at the top of the display 260 and the handler 1511d-2 positioned at the lower surface of the display 260 may have the same graphic elements, but different graphic elements may be applied to the handlers 1511d-1, 1511d-2 according to the position of the window 1510 to enhance user visibility.

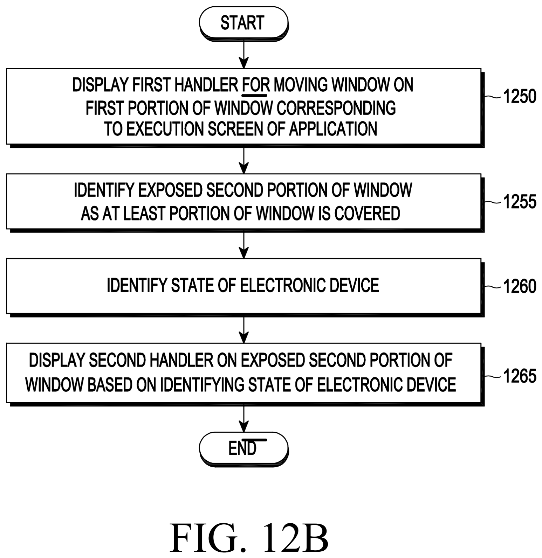

FIG. 12B is an operation flowchart of an electronic device based on a type of electronic device according to an embodiment.

Referring to FIG. 12B, the operating method may include operations 1250 to 1265. Each operation of the operating method of FIG. 12B may be performed by an electronic device (e.g., the electronic device 101 of FIG. 1, the electronic device 201 of FIG. 2) or at least one processor of the electronic device (e.g., the processor 120 of FIG. 1, the processor 220 of FIG. 2). In an embodiment, at least one of operations 1250 to 1265 may be omitted, the order of some operations may be changed, other operations may be added, and at least two operations may be performed in parallel. Further, for better understanding of the description in FIG. 12B, reference is made to FIGS. 16A to 17B.

In operation 1250, the electronic device 201 may control to display a first handler for moving the window on a first portion of a window corresponding to an execution screen of an application. In operation 1255, the electronic device 201 may identify an exposed second portion of the window as at least a portion of the window is covered. Since operations 1250 and 1255 correspond to operations 405 and 410 of FIG. 4, their detailed descriptions is omitted.

In operation 1260, the electronic device 201 may identify the state of the electronic device.

In operation 1265, based on identifying the state of the electronic device, the electronic device 201 may control to display a second handler on the exposed second portion of the window.

In an embodiment, the electronic device 201 may include a flexible or foldable display (e.g., the display 260 of FIG. 2). The electronic device 201 including a flexible display may be folded based on one axis and may vary between a folded state, an unfolded state, or a partially unfolded state (or partially folded state). The folding angle of the electronic device 201 may vary according to whether the state of the electronic device 201 is an unfolded state, a folded state, or a partially unfolded (or partially folded) intermediate state.

Referring to FIG. 16A for describing a display method of a handler based on an electronic device including a first type of flexible display according to an embodiment, the electronic device 201 may have a state of being erected while folded in half inward, such as in a compact form as illustrated in 1600a. Specifically, in a state folded in an 'in-folding' manner where the front surface (e.g., the surface where the display 260 is disposed) of the electronic device 201 forms an acute angle based on the folding axis, the electronic device 201 may display the window 1600 through the display 260 in the folded state.

When the window 1600 is displayed spanning across the upper display area and lower display area separated by folding as illustrated in 1600a, user touch on the handler 1611a positioned at the folding axis portion may be difficult. Therefore, as illustrated in 1600b, the electronic device 201 may move and arrange the handler 1611b to the area occupying a wider area between the upper display area and lower display area. For example, when a predetermined surface (e.g., upper surface) of the window 1610 is within a predetermined distance (e.g., about 4 cm) from the folding axis, the electronic device 201 may move and arrange the handler 1611b to the position farthest from the folding axis.

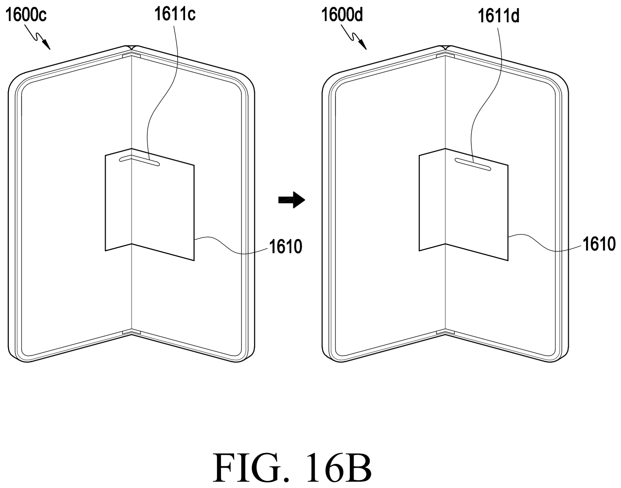

Referring to FIG. 16B for describing a first display method of a handler based on an electronic device including a second type of flexible display according to an embodiment, the electronic device 201 may have an erected state by supporting a surface where the sides of the body contact. When the window 1600 including the handler 1611c is displayed spanning across the left display area and right display area separated by folding as illustrated in 1600c, the electronic device 201 may move and arrange the handler 1611d to the area where the window 1600 occupies a wider area between the left display area and right display area as illustrated in 1600d. For example, when a predetermined surface (e.g., right surface) of the window 1610 is within a predetermined distance (e.g., about 4 cm) from the folding axis, the electronic device 201 may move and arrange the handler 1611 to the position farthest from the folding axis (e.g., right side of the window 1610).

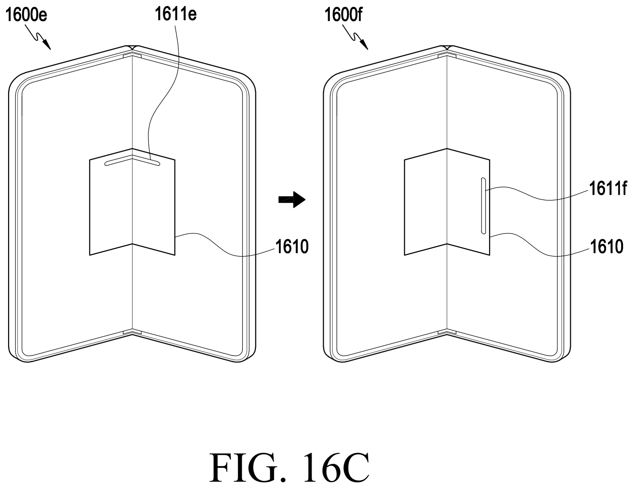

Referring to FIG. 16C for describing a second display method of a handler based on an electronic device including a second type of flexible display according to an embodiment, as illustrated in 1600e, the electronic device 201 may be in a state in which the window 1600 including the handler 1611e is displayed spanning across both the left display area and right display area. In this case, as illustrated in 1600f, the electronic device 201 may move and arrange the handler 1611f to a portion of the window 1610 displayed through either the left display area or right display area to facilitate selection of the handler 1611f. For example, the electronic device 201 may move and arrange the handler 1611f to the left or right side of the window 1610. For example, when the window 1610 is positioned within a predetermined distance (e.g., about 4 cm) from the folding axis, the electronic device 201 may move and arrange the handler 1611f from the folding axis to the long side of the window 1610 for easy user manipulation.

Meanwhile, while FIGS. 16A to 16C have described cases of moving and disposing the handler within the window 1610 as examples, the position of the popped-up window 1610 itself may be moved and displayed to facilitate selection of the handler within the window 1610. Further, whether to move and arrange the handler within the window 1610 may be determined based on at least one of the display ratio of the window 1610 divided based on the folding axis or the distance from the folding axis.

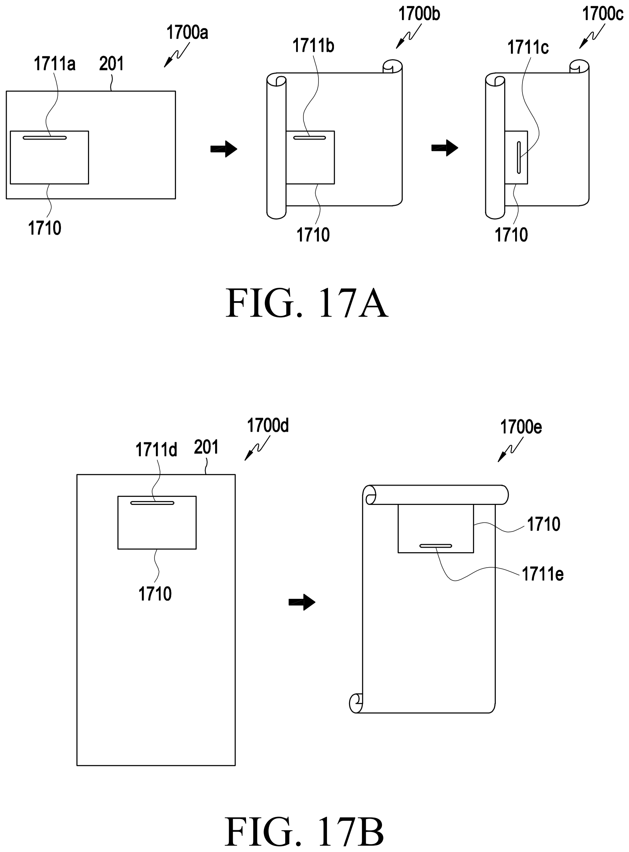

Meanwhile, FIG. 17A illustrates a first display method of a handler based on an electronic device including a rollable display according to an embodiment, and FIG. 17B illustrates a second display method of a handler based on an electronic device including a rollable display according to an embodiment.

Referring to FIG. 17A, as illustrated in 1700a, the window 1710 including the handler 1711a may be displayed on a portion of the display 260 with the rollable display (e.g., the display 260 of FIG. 2) unfolded. If the rollable display is drawn into the housing within the electronic device 201 or rolled in one direction, as illustrated in 1700b, the handler 1711b within the window 1710 may be moved and arranged to a position away from the rolling direction. For example, when the rollable display rolls to the right, the handler 1711b may also be moved and arranged to the right within the window 1710. Further, as illustrated in 1700c, when the size of the exposed area of the window 1710 becomes smaller within the threshold size as the rollable display rolls to the right, the handler 1711c may be moved and arranged to correspond to the exposed area. For example, in the case of a rollable display, since manipulation of the handler 1711a within the window 1710 may be difficult due to the rollable operation, as illustrated in 1700b or 1700c, the electronic device 201 may move and arrange the handlers 1711b, 1711c to other portions within the window 1710 while simultaneously changing and displaying at least one of the size or form.

Referring to FIG. 17B, as illustrated in 1700d, the window 1710 including the handler 1711d may be displayed on a portion of the display 260 with the rollable display (e.g., the display 260 of FIG. 2) unfolded. If the rollable display in an erected state is drawn into the housing within the electronic device 201 or rolled downward as illustrated in 1700e, the handler 1711e within the window 1710 may be moved and arranged to a position away from the rolling direction. For example, the handler 1711d displayed at the top of the window 1710 as illustrated in 1700d may be moved and arranged with only the handler 1711e to the lower surface of the window 1710 as illustrated in 1700e.

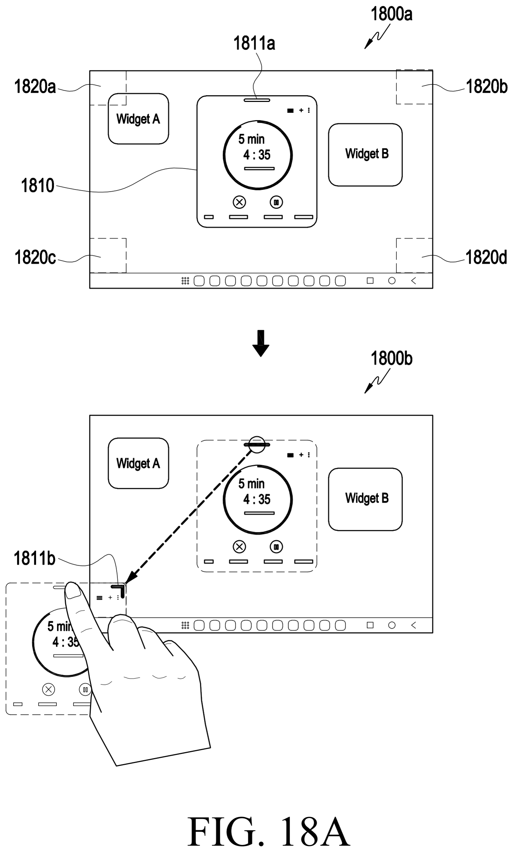

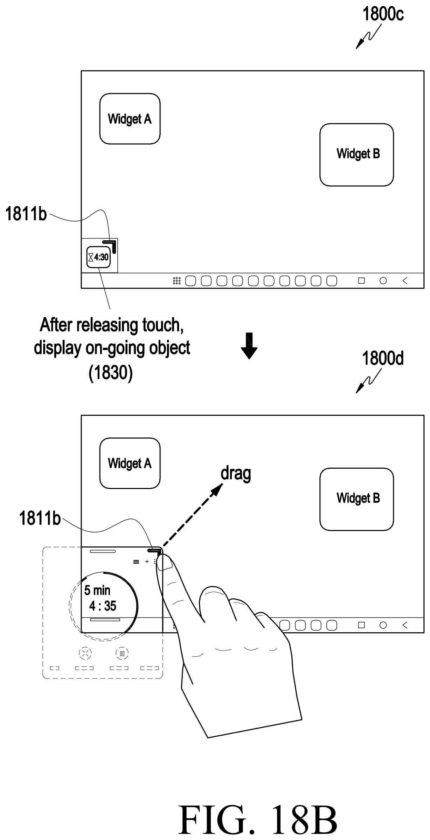

FIG. 18A is a view illustrating an example screen where an on-going object is displayed when entering a minimum pop-up area according to an embodiment, and FIG. 18B is a view following FIG. 18A.

Referring to 1800a of FIG. 18A, the electronic device 101 may display an execution screen of an application on at least a portion of the display 260 using an execution window 1810 of a first form. For example, an execution window of a specific form may be output in a pop-up form, picture in picture (PIP), or floating form. For example, the window 1810 executing a timer application may include remaining time of the timer function, items for stopping or resuming the timer function, items for ending the timer function, and graphic elements (or objects) indicating progress status. A user may move it to a corner of the display 260 using the first handler 1811a within the execution window 1810 of the application.

According to an embodiment, as illustrated in 1800a of FIG. 18A, minimum pop-up areas 1820a, 1820b, 1820c, 1820d may be designated for each corner of the display 260. The minimum pop-up area may be an area less than a threshold distance from each corner (e.g., four locations) and top/bottom/left/right edges of the display 260. As illustrated in 1800b of FIG. 18A, when the first handler 1811a is touched and dragged and the touch is maintained, the window 1810 for the executing application may be maintained as in 1800a.

On the other hand, when the window 1810 is moved to enter any one of the minimum pop-up areas 1820a, 1820b, 1820c, 1820d and a touch release is identified, as illustrated in 1800c of FIG. 18B, the electronic device 201 may display the exposed portion of the window 1810 at the corner portion of the display 260. Therefore, after the touch release, the electronic device 201 may display an angle bracket-type handler 1811b in the form of ' 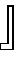 'or' 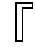 ', e.g., on the exposed portion of the window 1810. Further, the electronic device 201 may display an on-going object 1830 along with the handler 1811b on the exposed portion of the window 1810. The on-going object may be smaller in size than the first form execution window 1810 and include fewer components (e.g., icons, objects, menus, etc.). For example, the on-going object may be in the form where the remaining timer time is displayed in a minimum size. By doing this, accessibility to applications executed at corners of the display 260 may be enhanced and visibility may also be enhanced in their display.

Further, as illustrated in 1800d of FIG. 18B, when the window 1810 is moved away from the minimum pop-up area using the handler 1811b, the electronic device 201 may stop displaying the on-going object 1830 and display the screen of the executing application. For example, the electronic device 201 may display the window 1810 corresponding to the screen of the executing application again. According to an embodiment, the electronic device 201 may immediately convert the on-going object 1830 to the first form window 1810 even by a designated input method (e.g., double tap or long press) in addition to the input of touching and dragging the handler 1811b.

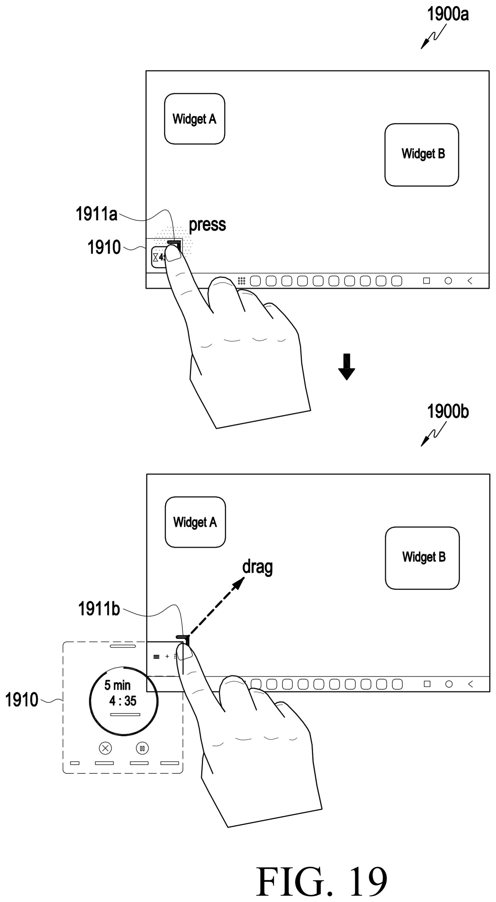

FIG. 19 is a view illustrating handler movement as an example of handler transformation according to an embodiment.

Referring to 1900a of FIG. 19, when a user wants to touch and drag the handler 1911a included in the window 1910 located at the corner of the display 260, a circumstance may occur where the handler 1911a is covered by the finger. In this case, as illustrated in 1900b of FIG. 19, the electronic device 201 may move and display the position of the handler 1911a to an area adjacent to the corner of the window 1910 (or outside the corner) to facilitate user selection. Further, while FIG. 1900b of FIG. 19 has described a case of changing and displaying the position of the handler 1911b as an example, user selection may be facilitated by changing and displaying not only the position of the handler 1911b but also at least one of the form, size, or color. For example, in the case of a handler located at the corner of the window 1910, even when the handler is bent and displayed, even when the corner edges have a length less than a threshold, the length of each edge may be different from each other, so the handler may be displayed with different bending forms based on the length of each edge. For example, in an angle bracket-type handler like' ¬', there may be a vertically long angle bracket type or a horizontally long angle bracket type, so at least one of the horizontal or vertical length of the handler may vary based on the horizontal or vertical length of the exposed portion of the window 1910.

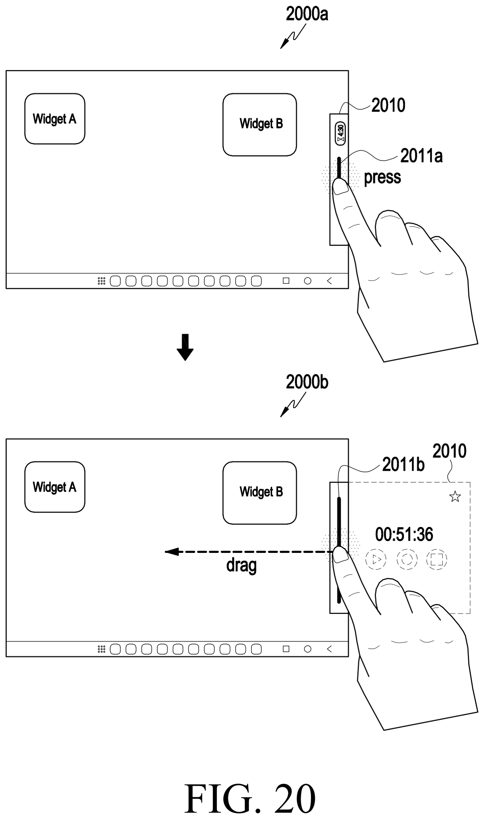

FIG. 20 is a view illustrating handler expansion as an example of handler transformation according to an embodiment.

Referring to 2000a of FIG. 20, it illustrates a case where a user wants to touch and drag the handler 2011a included in the exposed portion when only at least a partial area of the window 2010 is exposed beyond the edge of the display 260. In this case, as illustrated in 2000b of FIG. 20, the electronic device 201 may transform and display the form of the handler 2011b displayed in the exposed portion of the window 2010 to facilitate user selection. For example, user selection may be facilitated by changing and displaying the size of the handler 2011b to be larger than the previous size.

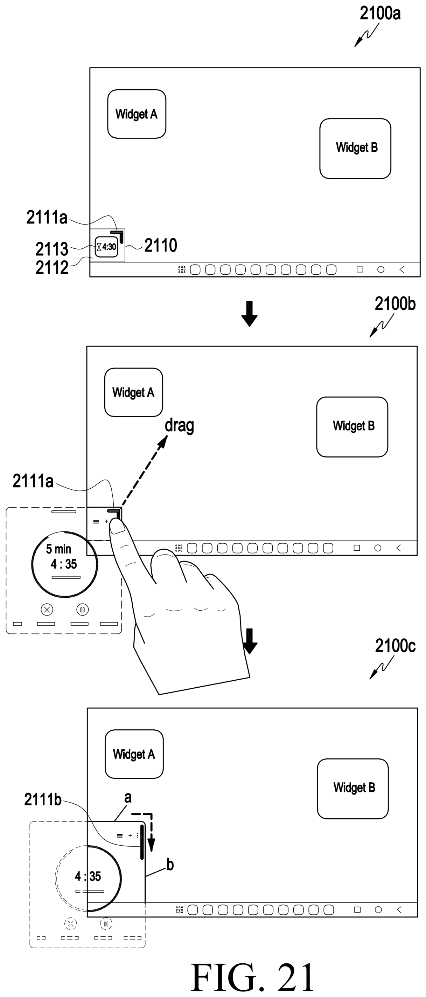

FIG. 21 is a view illustrating shape transformation of a handler according to an embodiment.

Referring to 2100a of FIG. 21, the electronic device 201 may display an angle bracket-type handler 2111a on the exposed portion 2112 of the window 2110. Further, the electronic device 201 may display an on-going object 2113 along with the handler 1811b. Referring to 2100b of FIG. 21, as the user touches and drags the handler 2111a, even when the window 2110 moves according to the dragged movement trajectory, the form of the handler 2111a may be maintained. In other words, while the touch on the handler 2111a is maintained, the form of the handler 2111a may not change.

Referring to 2100c of FIG. 21, when a touch release is detected while moving the window 2110, the electronic device 201 may change the form of the handler based on the form and/or size of the exposed portion of the window 2110. For example, when the aspect ratio of the horizontal (a) and vertical (b) among the corner edges of the exposed portion is above a threshold, the electronic device 201 may change the form of the handler from an angle bracket type (e.g., '¬' handler) 2111a to a bar type (e.g., ' | ' handler). As illustrated in 2100c of FIG. 21, the electronic device 201 may display the bar-type handler 2111b at the longer side position among the corner edges of the exposed portion.

As described above, in an embodiment, rather than simply moving and disposing the handler according to the movement of the window, when the window is disposed at a position, e.g., a position where user manipulation is difficult, user selection may be facilitated by changing and displaying at least one of the arrangement position, form, size, or color of the handler within the window.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-transitory storage medium storing instructions, the instructions are configured to cause an electronic device 101, 201 to perform at least one operation when executed by at least one processor 120, 220 of the electronic device, wherein the at least one operation includes displaying a first handler 511a, 611a, 711a, 811a for moving the window on a first portion of a window 510, 610, 710, 810 corresponding to an execution screen of an application. According to an embodiment, the at least one operation may include identifying at least one of a size, a position, or an orientation of an exposed second portion 512, 612, 712, 812 of the window as at least a portion of the window is covered. According to an embodiment, the at least one operation may include a method of determining a position and a size to display a second handler 511b, 611b, 711b, 811b based on at least one of the size, the position, or the orientation of the exposed second portion of the window. According to an embodiment, the at least one operation may include displaying a second handler 511b, 611b, 711b, 811b on the exposed second portion of the window based on the determined position and size of the second handler 511b, 611b, 711b, 811b.

## Claims

1. An electronic device (101, 201) comprising:
a display (160, 260);
at least one processor (120, 220) operatively connected to the display; and
memory (130, 230) operatively connected to the at least one processor; wherein the memory stores instructions which, when executed, cause the electronic device to:
display, through the display, a first handler (511a, 611a, 711a, 811a) for moving a window on a first portion of the window (510, 610, 710, 810) corresponding to an execution screen of an application;
identify at least one of a size, a position, or an orientation of an exposed second portion (512, 612, 712, 812) of the window as at least a portion of the window is covered;
based on at least one of the size, the position, or the orientation of the exposed second portion of the window, determine a position and a size to display a second handler (511b, 611b, 711b, 811b); and
display, through the display, the second handler (511b, 611b, 711b, 811b) on the exposed second portion of the window, based on the determined position and size of the second handler (511b, 611b, 711b, 811b).

2. The electronic device of claim 1, wherein the instructions are configured to cause the electronic device to, in case that the window is located at a corner of the display, display the second handler at a longer side among corner edges of the exposed second portion, based on the at least one of the size, the position, or the orientation of the exposed second portion of the window.

3. The electronic device of claim 1 or 2, wherein the instructions are configured to cause the electronic device to, in case that the window is located at a corner of the display, and when each of the corner edges of the exposed second portion has a length less than a threshold based on the at least one of the size, the position, or the orientation of the exposed second portion of the window, bend and display the second handler.

4. The electronic device of any one of claims 1 to 3, wherein the instructions are configured to cause the electronic device to:
cause at least a portion of the window to be covered by movement of the window based on an input to the first handler or by movement of another window; and
as at least a portion of the window is covered, control the display to display the second portion of the window as exposed and not display a remaining portion of the window.

5. The electronic device of any one of claims 1 to 4, wherein the instructions are configured to cause the electronic device to, when a distance between the first handler displayed on the first portion of the window and an adjacent edge of the display is less than a threshold distance by moving the window based on an input to the first handler, display the second handler on the exposed second portion of the window instead of the first handler.

6. The electronic device of any one of claims 1 to 5, wherein the instructions are configured to cause the electronic device to display the second handler with at least one of the shape, the color, or the size of the first handler changed.

7. The electronic device of any one of claims 1 to 6, wherein the instructions are configured to cause the electronic device to display at least one of an object representing an executing application corresponding to the window or a progress state of the executing application within the second handler or at a location adjacent to the second handler.

8. The electronic device of any one of claims 1 to 7, wherein the instructions are configured to cause the electronic device to:
when identifying the exposed second portion of the window, identify at least one of a mounting type of the electronic device or a connection with an input device; and
display, through the display, the second handler on the exposed second portion of the window based on identifying the mounting type or the connection with the input device.

9. The electronic device of any one of claims 1 to 8, wherein the instructions are configured to cause the electronic device to:
when identifying the exposed second portion of the window, identify a state of the electronic device; and
based on identifying the state of the electronic device, display, through the display, the second handler on the exposed second portion of the window.

10. The electronic device of any one of claims 1 to 9, wherein the instructions are configured to cause the electronic device to, in case that at least one other application is executing, display each handler in non-overlapping portions within the window such that handlers within windows corresponding to respective execution screens of the at least one other application do not overlap each other.

11. A method for moving an execution screen of an application in an electronic device (101, 201), comprising:
displaying a first handler (511a, 611a, 711a, 811a) for moving a window on a first portion of the window (510, 610, 710, 810) corresponding to an execution screen of an application;
identifying at least one of a size, a position, or an orientation of an exposed second portion (512, 612, 712, 812) of the window as at least a portion of the window is covered;
determining a position and a size to display a second handler (511b, 611b, 711b, 811b) based on at least one of the size, the position, or the orientation of the exposed second portion of the window; and
displaying the second handler (511b, 611b, 711b, 811b) on the exposed second portion of the window through the display based on the determined position and size of the second handler (511b, 611b, 711b, 811b).

12. The method of claim 11, wherein displaying the second handler on the exposed second portion of the window includes, in case that the window is located at a corner of a display of the electronic device, displaying the second handler at a longer side position among corner edges of the exposed second portion based on at least one of the size, the position, or the orientation of the exposed second portion of the window.

13. The method of claim 11 or 12, wherein displaying the second handler on the exposed second portion of the window includes, in case that the window is located at a corner of the display and each of the corner edges of the exposed second portion has a length less than a threshold based on at least one of the size, the position, or the orientation of the exposed second portion of the window, bending and displaying the second handler.

14. The method of any one of claims 11 to 13, wherein at least a portion of the window is covered by movement of the window based on an input to the first handler or by movement of another window, and wherein as at least a portion of the window is covered, the second portion of the window is displayed as exposed and a remaining portion of the window is not displayed.

15. A non-transitory storage medium storing instructions that, when executed by at least one processor (120, 220) of an electronic device (101, 201), cause the electronic device to perform at least one operation, the at least one operation comprising:
displaying a first handler (511a, 611a, 711a, 811a) for moving a window on a first portion of the window (510, 610, 710, 810) corresponding to an execution screen of an application;
identifying at least one of a size, a position, or an orientation of an exposed second portion (512, 612, 712, 812) of the window as at least a portion of the window is covered;
determining a position and a size to display a second handler (511b, 611b, 711b, 811b) based on at least one of the size, the position, or the orientation of the exposed second portion of the window; and
displaying the second handler (511b, 611b, 711b, 811b) on the exposed second portion of the window through the display based on the determined position and size of the second handler (511b, 611b, 711b, 811b).
